# EUROPÄISCHE PATENTSCHRIFT

(11) **EP 3 543 457 B1**
(45) Veröffentlichungstag und Bekanntmachung des Hinweises auf die Patenterteilung: **09.08.2023**
(21) Anmeldenummer: 19162517.7
(22) Anmeldetag: 13.03.2019
(51) Int. Cl.: E21B 47/005, E21B 47/113, E21B 47/135

(54) **VERFAHREN UND SYSTEM ZUR ÜBERWACHUNG EINES MATERIALS UND/ODER EINER VORRICHTUNG IN EINEM BOHRLOCH UNTER VERWENDUNG EINES FASEROPTISCHEN MESSKABELS**
METHOD AND SYSTEM FOR MONITORING A MATERIAL AND/OR A DEVICE IN A BOREHOLE USING A FIBER OPTIC MEASUREMENT CABLE
PROCÉDÉ ET SYSTÈME DE SURVEILLANCE D'UN MATÉRIAU ET/OU D'UN DISPOSITIF DANS UN PUITS DE FORAGE À L'AIDE D'UN CÂBLE DE MESURE DE FIBRE OPTIQUE

(30) Priorität: 13.03.2018 DE 102018105703
(43) Veröffentlichungstag der Anmeldung: 25.09.2019
(73) Patentinhaber: Helmholtz-Zentrum Potsdam - Deutsches GeoForschungsZentrum GFZ Stiftung des Öffentlichen Rechts des Landes Brandenburg, 14473 Potsdam (DE)
(72) Erfinder: Reinsch, Thomas, 44795 Bochum (DE); Aldaz, Santiago, 14482 Potsdam (DE); Raab, Tobias, 13349 Berlin (DE); Lipus, Martin, 12055 Berlin (DE); Jousset, Philippe, 12167 Berlin (DE); Henninges, Jan, 14089 Berlin (DE)
(74) Vertreter: Hertin und Partner Rechts- und Patentanwälte PartG mbB

(56) Entgegenhaltungen:
- WO-A1-2011/012406
- WO-A1-2014/058335
- US-A- 4 927 232
- US-A1- 2011 308 788

## Beschreibung

Die Erfindung betrifft in einem ersten Aspekt ein Verfahren zur Überwachung eines Stützmaterials und/oder einer Vorrichtung in einem Bohrloch unter Verwendung eines faseroptischen Messkabels, sowie in einem zweiten Aspekt ein System zur Durchführung des Verfahrens, wobei das System mindestens ein faseroptisches Messkabel umfasst, das in ein Bohrloch eingebracht vorliegt, wobei in dem Bohrloch ein Material und eine Vorrichtung vorliegen.

Das zu dieser Anmeldung führende Projekt hat eine Förderung aus dem Forschungs- und Innovationsprogramm der Europäischen Union "Horizont 2020" unter dem Fördervertrag Nr. 654497 (GeoWell) erhalten.

Es ist bekannt, dass einige fossile Brennstoffe, wie Erdöl oder Erdgas, unter Verwendung von Bohrlöchern aus der Erde oder Gesteinsschichten gefördert werden. Auch im Bereich der Geothermie, der Trinkwasserförderung, bei der Injektion von Flüssigkeiten, zum Beispiel zur Entsorgung oder zur Druckhaltung unter Tage, bei der Trinkwasserüberwachung oder bei der Überwachung von Wasserspiegeln werden Bohrlöcher verwendet, ohne darauf beschränkt zu sein. Es ist wünschenswert, wenn diese Bohrlöcher eine große Stabilität aufweisen und wenn die Stabilität eines Bohrlochs, die sogenannte Bohrlochintegrität, überwacht werden kann. Zur Stabilisierung eines Bohrlochs wird häufig Zement oder ein anderes aushärtendes und/oder dichtendes Material genutzt, der/das in das Bohrloch eingefüllt wird. Dabei müssen die Zementierungs-Crews an den Bohrlöchern insbesondere darauf achten, dass die Zementierung dicht ist und dass innerhalb des Materials keine Spannungen auftreten. Insbesondere muss die Bohrlochintegrität überwacht und speziell bei Erdgas- und/oder Erdöl-Förderung weiter beobachtet werden. Die Integrität eines Bohrlochs ist besonders deswegen wichtig, weil potentielle Kontaminationen migrieren können. Vorteilhafterweise kann mit der Erfindung auch ein Verlust von Einkommen vermieden werden, wenn die Bohrung nicht genutzt werden kann und gegebenenfalls aufwendig saniert werden muss, wenn eine Fehlstelle oder Leckage festgestellt wird. Solche Fehlstellen oder Leckagen können bis hin zur möglichen Aufgabe der Bohrung führen. Häufig wird der Zement hinter das Rohr gepresst, um ein stabiles Bohrloch zu gewährleisten.

Im Stand der Technik sind Verfahren und Systeme zum *Fluid Tracking* bekannt, mit denen das Fließverhalten eines flüssigen Stütz- und/oder Dichtmaterials während des Einfüllvorgangs in ein Bohrloch überwacht werden kann. Dabei kann es sich beispielsweise um Zement handeln, der zur Stabilisation des Bohrlochs und/oder zu dessen hydraulischer Abdichtung in dieses eingebracht wird. Dieser Vorgang wird beispielsweise auch als "Verpumpen des Zements" bezeichnet. Der Begriff kann aber auch andere Begriffe, wie Flüssigkeiten oder Fluide, wie Gas, betreffen. insbesondere sind im Stand der Technik Verfahren und Systeme bekannt, die es ermöglichen, die Grenzflächen zwischen unterschiedlichen flüssigen Materialien in einem Bohrloch zu untersuchen. Beim *Fluid Tracking* werden akustische Messungen durchgeführt, mit denen Signale erfasst werden können, die von fließendem Zement selbst stammen und geeignet sind, dieses zu charakterisieren. Dadurch können Materialeigenschaften oder Besonderheiten im flüssigen und fließenden Zement, wie Lücken oder Blasen, ermittelt oder bestimmt werden. Diese Materialeigenschaften können insbesondere den Zement und sein Fließverhalten betreffen.

Nachteilig an diesen Verfahren und Systemen, die aus dem Stand der Technik bekannt sind, ist, dass damit lediglich die Eigenschaften von flüssigen und fließenden Materialien während der Operation des Zementierens eines Bohrlochs untersucht werden können. Die bekannten Verfahren und Systeme ermöglichen insbesondere keine Aussagen über die mechanischen Eigenschaften eines Materials, insbesondere des Zements, zu jedem Zeitpunkt entlang des gesamten Lebenszyklus des Bohrloches. Es besteht insbesondere ein Bedürfnis, die Integrität des Bohrlochs dauerhaft zu überwachen, nachdem flüssige Materialien, wie Zement, in das Bohrloch eingebracht wurden und die Materialien nicht mehr fließen. Darüber hinaus wäre es wünschenswert, wenn neben dem Material weitere Gegenstände, die im Bohrloch vorhanden sind, hinsichtlich ihrer mechanischen Eigenschaften überwacht werden könnten.

Die Druckschrift WO 2011/012406 A1 offenbart eine Vorrichtung und ein Verfahren zum ortsaufgelösten Erfassen von Bodenbewegungen. Es wird eine Lichtleiteranordnung (bevorzugt mehrere Glasfaserkabel) in ein Verfüllmaterial eingebettet, welches in ein Bohrloch eingebracht wird. Die Glasfaserkabel können dabei Faser-Bragg-Gitter aufweisen. Dies dient optischen Dehnungs- und Schermessungen innerhalb des Bohrloch.

Neben Messungen mit Faser-Bragg-Gittern können auch optische Messungen durch Rückstreumessungen ausgeführt werden.

US 4927232 A offenbart eine Glasfaserkabelanordnung, die u.a. für die Überwachung von in den Boden eingebrachten Bohrlöchern fungieren kann. Über optische Messverfahren (bspw. Dehnungsmessung) können Aussagen über die physikalischen Eigenschaften des mit dem Glasfaserkabel in Verbindung stehenden Verrohrung/ Stützmaterial getätigt werden.

WO 2014/058335 A1 offenbart ein Verfahren sowie eine Vorrichtung zur Überwachung der Zementqualität eines Bohrlochs. Hierbei werden Glasfaserkabel in den Zement, welcher als Stützmaterial des Bohrlochs verwendet wird, eingebettet. Anschließend wird eine Ultraschallquelle in das Bohrloch eingeführt. Durch optische Messungen innerhalb der Faser und deren Auswertungen können physikalische Eigenschaften den Zement bestimmt werden.

US 2011/0308788 A1 offenbart ein Verfahren bzw. eine Vorrichtung zur Überwachung eines Bohrlochs, insbesondere des um das Bohrloch anliegenden Zements. Hierbei wird ein Glasfaserkabel in das Stützmaterial (hier: Zement) integriert. Laserimpulse werden in das Glasfaserkabel eingeleitet, wodurch Dehnungen und Vibrationen gemessen werden können.

Es ist daher Aufgabe der vorliegenden Erfindung, ein System und ein Verfahren bereitzustellen, die nicht die Mängel und Nachteile des Standes der Technik aufweisen. Insbesondere ist es ein Anliegen der Erfindung, ein System und ein Verfahren bereitzustellen, mit denen die mechanischen Eigenschaften eines Materials und weiterer Gegenstände in einem Bohrloch zu jedem Zeitpunkt entlang des gesamten Lebenszyklus des Bohrloches überwacht werden können.

### Beschreibung der Erfindung:

Gelöst wird die Aufgabe durch die Merkmale der unabhängigen Ansprüche. Vorteilhafte Ausgestaltungen der Erfindung sind in den abhängigen Ansprüchen beschrieben.

In einem ersten Aspekt betrifft die Erfindung ein Verfahren zur Überwachung einer Bohrlochintegrität durch Überwachung eines in das Bohrloch eingebrachten Stützmaterials und/oder einer eingebrachten Vorrichtung unter Verwendung mindestens eines faseroptischen Messkabels umfassend die folgenden Schritte:
a) Einbringen des mindestens einen faseroptischen Messkabels in das Bohrloch und in Verbindung des Messkabels mit dem Stützmaterial und/oder der Vorrichtung;
b) Durchführung von Vibrations- und/oder Dehnungsmessungen innerhalb des Bohrlochs, wobei als Messsignal eine Zeitreihe einer Dehnung und/oder eine Dehnungsänderung mindestens eines Bereichs des faseroptischen Messkabels zur Ermittlung einer Dehnung und/oder einer Dehnungsänderung des in diesem Bereich das faseroptische Messkabel umgebenden Stützmaterials und/oder der in diesem Bereich das faseroptische Messkabel umgebenden Vorrichtung verwendet wird;
c) Analyse von Dehnungsamplituden und/oder einer Dehnungsamplitudenverteilung durch Zeitreihenvergleiche für verschiedene Bereiche und/oder verschiedene Zeiten zur Ermittlung einer mindestens bereichsweise ortsaufgelösten und/oder zeitaufgelösten Verteilung einer Information über den Zustand des Stützmaterials und/oder der Vorrichtung.

Die Überwachung einer Bohrlochintegrität umfasst bevorzugt die Überwachung eines in das Bohrloch eingebrachten Stützmaterials und/oder einer eingebrachten Vorrichtung. Die Integrität bzw. die Stabilität und/oder Sicherheit des Bohrlochs betreffende Überwachung eines Bohrlochs bezieht sich insbesondere auf ein eingebrachtes Stützmaterial (z. B. Zement) oder eine eingebrachte Vorrichtung (z. B: Verrohrung). Bohrlöcher in der Erde können insbesondere eine geologische Formation z. B. aus Gestein umfassen, in die ein vorzugsweise im Wesentlichen Vertikales Loch vorzugsweise einer Endtiefe oder -teufe gebohrt wird. Zur Stützung und Stabilisierung des Lochs wird vorzugsweise die Verrohrung zur Auskleidung der Bohrung verwendet, wobei bevorzugt zwischen Verrohrung und Gestein mindestens ein Stützmaterial eingebracht wird. Es ist besonders vorteilhaft, dass ursprünglich vorhandene Hohlräume zwischen Verrohrung und Gestein in homogener Weise und im Wesentlichen vollständig durch Stützmaterial ausgefüllt wird und dass sowohl Vorrichtung als auch Material keine unerwünschte Inhomogenitäten und/oder Beschädigungen umfassen. Zum Einbringen wird ein Stützmaterial vorzugsweise verpumpt. Ein Stützmaterial wird in diesem Text vorzugweise ebenfalls als Material bezeichnet.

Zur Überwachung wird mindestens ein faseroptisches Messkabel verwendet. Dabei handelt es sich insbesondere um ein Faseroptisches Kabel bzw. eine optische Glasfaser. Diese ist vorzugsweise dem Anwendungsgebiet angepasst, das heißt z. B., dass eine ist schützende Ummantelung der Faser vorhanden sein kann, welche gleichzeitig eine Übertragung von Dehnungen und oder Temperaturen der Faserumgebung im Bohrloch ermöglicht. Das faseroptische Messkabel wird vorzugsweise in dieser Beschreibung auch als Faser bezeichnet. Vorzugsweise ist die Glasfaser in einem Kabel geschützt.

Das faseroptische Messkabel wird in das Bohrloch eingebracht und mit Stützmaterial und/oder der Vorrichtung in Verbindung gebracht. Dabei bedeutet ein in Verbindung bringen, dass ein physischer und/oder mechanischer Kontakt zwischen Faser und Stützmaterial und/oder der Vorrichtung besteht. Dieser kann durch eine feste und im Wesentlichen nicht lösliche Verbindung erzeugt werden, z. B. in dem die Faser in dem Stützmaterial und/oder Dichtmaterial zum Abdichten eingegossen wird oder durch Verbindungselemente mit der Verrohrung verbunden wird (Kleben, Kabelbinder etc.). Der Begriff Stützmaterial meint bevorzugt ein Stütz- und/oder ein Dichtmaterial. Ein Stützmaterial ist somit vorzugsweise ein Stütz- und/oder Dichtmaterial. Es kann ebenso bevorzugt sein, dass die Faser in einem Loch geführt wird und durch die eigene Gewichtskraft formschlüssig mit dem Stützmaterial und/oder der Vorrichtung verbunden ist, wobei Stützmaterial und/oder der Vorrichtung zu einer perfekten vertikalen Ausrichtung leicht verkippt vorliegen und die Faser damit zumindest bereichsweise aufliegt. Die Übertragung von Dehnungen kann dabei durch Reibung zwischen Faser und Stützmaterial und/oder Vorrichtung vermittelt werden. Die Faser kann dabei vorzugsweise im Wesentlichen vertikal längs des Bohrlochs verlaufen, jedoch ebenso zumindest bereichsweise einen horizontalen Verlauf bezüglich der Längsachse der Faser aufweisen.

Die Faser dient dabei vorzugsweise der Durchführung von Vibrations- und/oder Dehnungsmessungen innerhalb des Bohrlochs. Dabei sind Vibrationsmessungen vorzugsweise ebenso Dehnungsmessungen, die ein sich zeitlich schnell änderndes Signal betreffen, welches vorzugsweise auch periodische Anteile aufweisen kann. Schnell bezieht sich vorzugsweise auf eine Änderungsrate der Dehnung. Bezogen auf eine zumindest teilweise periodische Änderungsrate können vorzugsweise Signale mit einer (dominanten) Frequenz im Bereich von 0,01 Hz bis 2 Gigahertz (GHz) gemessen werden. Besonders bevorzugt ist der Bereich von 0,01 Hz bis 100 MHz, stärker bevorzugt 0,01 Hz bis 10 MHz, noch stärker bevorzugt 0,01 Hz bis 1 MHz, stark bevorzugt 0,01 Hz bis 100 kHz und insbesondere 0,01 Hz bis 20 Kilohertz (kHz), aber auch andere bevorzugte Frequenzbereich, welche zumindest teilweise die Änderungsrate einer messbaren Dehnung beschreiben, werden in dem vorliegenden Text beschrieben. Vorzugsweise umfasst eine Vibrationsmessungen und/oder Dehnungsmessung eine passive akustische Messung. Eine passive akustische Messung umfasst vorzugsweise eine akustische Messung unter Nutzung von Signalen, die nicht extra für diese Messung erzeugt wurden (natürlich oder anthropogen).

Als Messsignal dient bevorzugt einer Dehnung und/oder eine Dehnungsänderung mindestens eines Bereichs des faseroptischen Messkabels. Diese wird vorzugsweise in regelmäßigen Zeitabständen gemessen und/oder aufgezeichnet, so dass eine Zeitreihe einer Dehnung und/oder Dehnungsänderung gemessen wird. Die Zeitabstände richten sich bevorzugt nach einer Wiederhol- bzw. Messrate, mit der das Messsignal erhoben wird. Diese kann vorzugsweise durch eine Frequenz beschrieben werden. Diese kann z. B. in der Größenordnung, 1 Hz, 10 Hz, 100 Hz, 1 kHz, 10 kHz, 100 kHz, 1 MHz, 10 MHz und oder 100 MHz liegen. Ein Fachmann weiß, dass eine messbare maximale (dominante) Frequenz des gemessenen Signals in einem Zusammenhang mit dieser Mess- bzw. Abtastrate steht. Eine über die Zeit gemittelte Dehnungsänderung kann dabei vorzugsweise zur Berechnung einer Dehnung verwendet werden. Es kann bspw. die Dehnung zu einer bekannten Referenz gemessen werden und/oder Änderungen der Dehnung pro Zeitschritt bzw. Messzeitpunkt, wobei vorzugsweise durch zeitliche Integration auf die Dehnung geschlossen werden kann. Eine Dehnung kann vorzugsweise eine Streckung bzw. Expansion und/oder eine Stauchung bzw. Kontraktion umfassen. Dabei bezieht sich die Dehnung insbesondere auf eine Längenänderung der Faser entlang ihrer Längsachse. Ein Bereich des faseroptischen Messkabels umfasst dabei vorzugsweise einen Bereich der Faser entlang ihrer Längsachse. Die Faser kann insbesondere entlang der Längsachse in Bereiche aufgeteilt werden, innerhalb derer eine Messung der Dehnung und/oder Dehnungsänderung der Faser gemessen werden kann, welche von der in Verbindung gebrachten Vorrichtung und/oder des Stützmaterials im Wesentlichen übertragen wurde. So kann z. B. bei einer im Wesentlichen vertikal verlaufenden Faser diese in vertikal von oben nach unten angeordnete Bereiche aufgeteilt werden, denen ein Messwert und die zugehörige Tiefe des Bereichs innerhalb des Bohrlochs zugeordnet werden kann. Die Länge der Bereiche entlang der Faser steht dabei vorzugsweise im Zusammenhang mit der Ortsauflösung der Messung, z. B. der vertikalen bzw. Tiefenauflösung. Der Messwert, welcher insbesondere als Zeitreihe vorliegt, wird dann vorzugsweise zur Ermittlung einer Dehnung und/oder einer Dehnungsänderung des in diesem Bereich das faseroptische Messkabel umgebenden Stützmaterials und/oder der in diesem Bereich das faseroptische Messkabel umgebenden Vorrichtung verwendet. Dabei betreffen die umgebenden Bereiche vorzugsweise in radialer Richtung um die Bereiche der Faser um die Längsachse der Faser angeordnete Bereiche. Dabei wird insbesondere eine Dehnung und/oder einer Dehnungsänderung der an die Faser direkt angrenzenden Bereiche ermittelt. Durch diese können jedoch vorzugsweise auch Dehnung und/oder einer Dehnungsänderung in radial von der Faser weiter entfernten Bereiche ermittelt werden. Diese Bereiche betreffen bevorzugt die radial entlang der Längsachse der Faser angeordneten Bereiche des Bohrlochs. Ein Bereich kann sich dabei in radialer Richtung auf die Kontakt- und/oder in Verbindung liegende Fläche des Materials und/oder der Vorrichtung und der Faser beziehen. Ein Bereich kann sich jedoch auch in radialer Richtung in einem Radius um die Faser erstrecken, welcher z. B. 1 Zentimeter (cm), 10 cm, 1 Meter (m), 10 m und/oder 100 m umfasst. Der gesamte erfasste Bereich der Vorrichtung und/oder des Stützmaterials hat dabei vorzugsweise eine im Wesentlichen zylindrische Form mit einer Höhe, welcher im Wesentlichen dem Bereich der Faser entspricht und einem wie vorstehend beschriebenen Radius. Es werden bevorzugt auch Bereiche mehrerer Schichten (Zement/Verrohrung) ermittelt. Wird das Messkabel (die Faser) z. B. mit dem Stützmaterial verbunden, kann der Bereich auch die Vorrichtung umfassen, welche dementsprechend (vorzugsweise gemeinsam mit dem Stützmaterial) vermessen werden kann und umgekehrt. Bevorzugt ist die Faser vertikal angeordnet und eine Messung umfasst in erster Linie vertikale (entlang der Faser) angeordnete Messpunkte bzw. Bereiche. Eine Installation der Faser in horizontaler Richtung oder in helischer Anordnung (bevorzugt eine Mischung von vertikaler und horizontaler Komponente der Längsanordnung der Faser) kann indes ebenso bevorzugt sein. Dabei werden bevorzugt entsprechende Bereiche der Vorrichtung und/oder des Materials vermessen, welche wie beschrieben entlang der Längsachse der Faser angeordnet sind. Es wird bevorzugt zwar ein Wert lokal an der Faser (in einem Bereich) gemessen, dieser ist jedoch insbesondere beeinflusst von der Ankopplung der verschiedenen Schichten in einem Bohrloch (Verrohrungen und/oder Stützmaterial). Es ist daher bevorzugt eine integrale Messung, wobei die weiter entfernten Schichten vorzugsweise einen geringeren Einfluss auf das Messsignal haben. Vorzugsweise kann in den die Faserbereiche umgebenden Bereichen auch radial (auf die vorzugsweise im Wesentlichen zylindrische Längsachse des Bohrlochs bezogen) ortsaufgelöst gemessen werden, z: B. durch Kombination von verschieden angeordneten Fasern für das Messverfahren-
Begriffe wie im Wesentlichen, ungefähr, etwa, ca. etc. beschreiben bevorzugt einen Toleranzbereich von weniger als ± 40%, bevorzugt weniger als ± 20%, besonders bevorzugt weniger als ± 10 %, noch stärker bevorzugt weniger als ± 5% und insbesondere weniger als ± 1%. "Ähnlich" beschreibt bevorzugt Größen die ungefähr gleich sind. Teilweise beschreibt bevorzugt zu mindestens 5 %, besonders bevorzugt zu mindestens 10 %, und insbesondere zu mindestens 20 %, in einigen Fällen zu mindestens 40 %.

In einem weiteren Schritt des Verfahrens werden die gemessenen Dehnungsamplituden und/oder einer Dehnungsamplitudenverteilungen bevorzugt durch Zeitreihenvergleiche für verschiedene Bereiche und/oder verschiedene Zeiten analysiert. Dabei können Zeitreihen aus verschiedenen Bereichen (der Faser) miteinander verglichen werden, welche gleichzeitig oder zu verschiedenen Zeitpunkten gemessen wurden. Auch Zeitreihen gleicher Bereiche zu verschiedenen Zeitpunkten können gemessen werden. Dabei umfassen verglichene Zeitreihen vorzugsweise eine im Wesentlichen gleiche Anzahl an zeitlichen Messpunkten. Wenn Zeitreihen von verschiedenen Zeitpunkten verglichen werden, sind dabei vorzugsweise endliche Zeitreihen mit zeitlichen Messpunkten um und/oder umfassend den Zeitpunkt gemittelt. Vorzugsweise durch Unterschiede in den verglichenen Messsignalen, welche z. B. Amplituden, Frequenzen etc. betreffen können dabei mindestens bereichsweise ortsaufgelöste und/oder zeitaufgelöste Verteilung einer Information über den Zustand des Stützmaterials und/oder der Vorrichtung ermittelt werden. Eine Information über den Zustand umfasst dabei vorzugsweise Informationen über Homogenität, Ankopplung, z. B. zwischen Stützmaterial und Gestein bzw. Verrohrung, Schäden, Stabilität, Ermüdung und/oder Elastizität des Stützmaterials und/oder der Vorrichtung. Eine Analyse von Dehnungsamplituden und/oder einer Dehnungsamplitudenverteilung kann dabei eine mathematische und/oder elektronische Weiterverarbeitung der Messdaten umfassen, umfassend z. B. Fourier-Transformation, spektrale Filterung und/oder zeitliche Filterung. Eine Verteilung bezeichnet insbesondere eine räumliche und/oder zeitliche Verteilung. Damit ist insbesondere gemeint, dass die Information über den Zustand des Stützmaterials und/oder der Vorrichtung räumlich und/oder zeitlich aufgelöst abhängig von der Messauflösung gemessen werden kann.

Durch das Verfahren können mit einem einfachen und robusten Aufbau zur Dehnungsmessung umfassende Erkenntnisse über den Zustand eines Bohrlochs gewonnen werden.

Erfindungsgemäß wird als Verteilung der Information über den Zustand eine Verteilung der Information über eine akustischen Impedanz und/oder über eine mechanische Kopplung von Stützmaterial, Vorrichtung und/oder Bohrlochumgebung verwendet, um Bereiche im Bohrloch zu bestimmen, an denen eine erhöhte Wahrscheinlichkeit für ein Auftreten von Materialermüdung des Stützmaterials und/oder der Vorrichtung besteht. Es hat sich gezeigt, dass die akustische Impedanz und/oder mechanische Kopplung besonders gut für eine solche Messung geeignet ist und umfassende Aussagen zulässt.

In einer weiteren bevorzugten Ausführungsform der Erfindung wird die Information über eine mechanische Kopplung durch einen Vergleich von Dehnungsamplituden verschiedener Bereiche und/oder Zeiten bestimmt, wobei eine im Vergleich größere Dehnungsamplitude eine geringere mechanische Kopplung und/oder einer erhöhte Materialermüdung bedeuten. Insbesondere wenn eine Schallquelle und/oder der Ursprung einer Dehnung innerhalb des Bohrlochs umfassend Stützmaterial und/oder Vorrichtung vorliegt, deutet eine im Vergleich erhöhte Amplitude bevorzugt auf eine schlechte Ankopplung eines ermittelten Bereichs von Stützmaterial bzw. Vorrichtung mit der Umgebung hin, da hierdurch eine Dehnung bzw. Schalldruckwellen nur vermindert an diese mechanisch gekoppelt werden kann. So können Bereiche ermittelt werden, welche gegenüber anderen Bereichen und/oder im Vergleich mit früheren Zeitpunkten schlechtere Ankopplung aufweisen. Dies kann auf vorteilhafterweise auf Ermüdung, Inhomogenitäten und/oder Instabilitäten hinweisen. Auch wenn eine Schallquelle und/oder der Ursprung einer Dehnung außerhalb des Bohrlochs umfassend Stützmaterial und/oder Vorrichtung vorliegt, ist bevorzugt, dass eine im Vergleich erhöhte Amplitude bevorzugt auf eine schlechte Ankopplung eines ermittelten Bereichs von Stützmaterial bzw. Vorrichtung mit der Umgebung hinweist. Dies liegt z. B. daran, dass eine schlechte mechanische Ankopplung eine größere Schwingung des Systems erlaubt.

Erfindungsgemäß wird die Information über die akustische Impedanz und/oder über eine mechanische Kopplung durch Vergleich von gemessenen Dehnungsamplituden verschiedener Bereiche und/oder Zeiten mit einer Referenzmessung bestimmt. Der Begriff Referenzmessung umfasst eine oder mehrere Messungen, bei denen eine Vielzahl von Bedingungen, unter denen die Messung stattgefunden hat, bekannt sind und/oder auch die gemessenen physikalischen Größen bekannt sind. Daher können diese Messungen z. B. als Kalibrationsmethode für das Messverfahren herangezogen werden. Referenzmessungen können auf anderen Messmethoden beruhen und/oder theoretische Berechnungen umfassen. So kann z. B. durch eine oder mehrere Referenzmessung auch ein Absolutwert einer akustischen Impedanz eines Bereichs einer Faserumgebung vermessen werden. Diese kann vorzugsweise nicht nur entlang der Faserbereiche, sondern auch radial (auf die Längsachse des Bohrlochs bezogen) ortsaufgelöst sein, z: B. durch Kombination von verschieden angeordneten Fasern für das Messverfahren-
In einer weiteren bevorzugten Ausführungsform der Erfindung umfassen die Vibrations- und/oder Dehnungsmessungen ortsverteilten Dehnungsmessungen.

Ortsverteilte Dehnungsmessungen sind vorzugsweise auch unter der engl. Bezeichnung *Distributed Strain Sensing (DSS)* bekannt. Wenn die Abtastrate der Messung bevorzugt hoch genug ist, um seismische oder akustische Signale erfassen zu können, wird das Messverfahren auch vorzugsweise als ortsverteilte akustische Messung (*engl.: distributed acoustic sensing* - *DAS*) oder ortsverteilte Vibrationsmessung (engl.: *distributed vibration sensing* - *DVS*) bezeichnet. Das zugrunde liegende Messprinzip ist hierbei in der Regel die Messung von Phasenänderungen des rückgestreuten Lichts entlang einer Glasfaser.

In einer weiteren bevorzugten Ausführungsform der Erfindung wird eine Anordnung des faseroptischen Messkabels in Längsrichtung entlang des Bohrlochs vorgenommen und die Dehnung und/oder die Dehnungsänderung umfasst vertikale Bereiche des faseroptischen Messkabels. Dadurch werden die Realisierung des Verfahrens und eine Auswertung besonders vereinfacht.

In einer weiteren bevorzugten Ausführungsform der Erfindung liegt das faseroptische Messkabel in einem Stützmaterial in dem Bohrloch angeordnet vor.

In einer weiteren bevorzugten Ausführungsform der Erfindung wird das faseroptische Messkabel in dem Bohrloch abgehangen und/oder in Verbindung mit einer Verrohrung in dem Bohrloch verwendet.

In einer weiteren bevorzugten Ausführungsform der Erfindung umfasst das Stützmaterial ein das Bohrloch aushärtendes und/oder dichtendes Material, insbesondere Zement, wobei die Messungen vorzugsweise während und/oder nach einem Aushärten des Stützmaterials vorgenommen werden.

So kann bei einer Messung vorteilhafterweise sowohl ein fertiges, zur Förderung bereitstehendes und/oder benutztes Bohrloch überwacht werden als auch ein zeitlicher Verlauf bei der Erstellung der Bohrung/des Bohrlochs.

In einer weiteren bevorzugten Ausführungsform der Erfindung umfasst die Vorrichtung die Verrohrung in dem Bohrloch und/oder einen Bohrstrang.

In einer weiteren bevorzugten Ausführungsform der Erfindung liegen die Messkabel permanent oder temporär in dem Bohrloch eingebracht vor.

In einem weiteren Aspekt betrifft die Erfindung ein System zur Durchführung des hier beschriebenen Verfahrens, wobei das System ein faseroptisches Messkabel umfasst, das in ein Bohrloch eingebracht vorliegt, wobei in dem Bohrloch ein eingebrachtes Stützmaterial und eine eingebrachte Vorrichtung vorliegen, wobei das faseroptische Messkabel dazu eingerichtet ist, mittels Vibrations- und/oder Dehnungsmessungen, bevorzugt mittels ortsverteilter Dehnungsmessungen, Dehnungsinformationen hinsichtlich des Stützmaterials und/oder der Vorrichtung zu ermitteln.

Der durchschnittliche Fachmann erkennt, dass technische Merkmale, Definitionen und Vorteile bevorzugter Ausführungsformen des erfindungsgemäßen Verfahrens auch für das erfindungsgemäße System gelten.

Erfindungsgemäß umfasst das System eine Recheneinheit zur Analyse von Dehnungsamplituden und/oder eine Dehnungsamplitudenverteilung. Durch die Recheneinheit kann bevorzugt der Analyseschritt des vorgestellten Überwachungsverfahrens vorgenommen werden. Eine Recheneinheit umfasst vorzugsweise mindestens einen Computer oder mindestens eine digitale Logikschaltung, welcher zur Durchführung von Algorithmen und/oder Rechenschritten geeignet ist, z. B. ein Mikroprozessor.

In einer weiteren bevorzugten Ausführungsform der Erfindung umfasst das System ferner ein Dehnungsmessgerät und/oder ein Dehnungsänderungsmessgerät zur Verarbeitung der Dehnungsinformationen umfasst.

In einer weiteren bevorzugten Ausführungsform der Erfindung umfasst das System einen Zentralisator zur Zentralisierung einer Verrohrung im Bohrloch umfasst.

In einem Aspekt betrifft die Erfindung ein Verfahren zur Überwachung eines Materials und/oder einer Vorrichtung in einem Bohrloch unter Verwendung mindestens eines faseroptischen Messkabels vorgesehen, das die folgenden Schritte umfasst:
a) Einbringen des mindestens einen faseroptischen Messkabels in ein Bohrloch
b) Durchführung von passiven akustischen Messungen innerhalb des Bohrlochs, wobei als Messsignal eine Dehnung und/oder eine Dehnungsänderung des Materials und/oder der Vorrichtung verwendet wird
c) Analyse von Dehnungsamplituden und/oder einer Dehnungsamplitudenverteilung zur Ermittlung einer Verteilung einer akustischen Impedanz innerhalb des Materials und/oder der Vorrichtung,
wobei die Messungen nach Beendigung eines Verpumpens des Materials erfolgen.

Der durchschnittliche Fachmann erkennt, dass technische Merkmale, Definitionen und Vorteile bevorzugter Ausführungsformen des erfindungsgemäßen Verfahrens gemäß dieses Aspekts auch für das oben stehend beschriebene, erfindungsgemäße Verfahren und das obenstehende erfindungsgemäße System gelten.

Überraschenderweise kann durch die Kombination der Verfahrensschritte des vorgeschlagenen Verfahrens eine Überwachung der Bohrlochintegrität zu jedem Zeitpunkt entlang des gesamten Lebenszyklus des Bohrloches erreicht werden. Der Begriff "gesamter Lebenszyklus eines Bohrlochs" bezeichnet im Sinne der Erfindung bevorzugt die Zeitspanne vom Abschalten der Pumpen, mit denen der Zement oder das anderweitig abdichtende Material in das Bohrloch gepumpt wird, also vorzugsweise dem Zeitpunkt, an dem der Zement nicht mehr fliest, bis zu dem Zeitpunkt, an dem die Bohrung aufgegeben und rückgebaut wird. Vorzugsweise wird dies dadurch ermöglicht, dass das faseroptische Messkabel in dem Bohrloch angeordnet vorliegt und zur Durchführung von passiven akustischen Messungen innerhalb des Bohrlochs verwendet wird. Bei dem faseroptischen Messkabel kann es sich beispielsweise um ein Glasfaserkabel handeln.

Es ist im Sinne der Erfindung bevorzugt, dass das vorgeschlagene System ein oder mehrere Messkabel umfassen kann. Bei der Verwendung von einem faseroptischen Messkabel wird vorzugsweise eine 1-D-lnformation in Bezug auf eine Achse des Bohrlochs erhalten. Bei der Verwendung von zwei oder mehr Messkabeln ist es möglich, eine 2-D-lnformation um die Bohrlochachse zu erhalten. Es ist insbesondere bevorzugt, die räumliche Auflösung innerhalb einer Tiefe im Bohrloch zu erhöhen. Die Erfinder haben insbesondere erkannt, dass Dehnungsamplituden und/oder eine Dehnungsamplitudenverteilung genutzt werden können, um eine Verteilung einer akustischen Impedanz innerhalb des Materials und/oder der Vorrichtung zu ermitteln. Es kann im Sinne der Erfindung auch bevorzugt sein, durch die Analyse der Dehnungsdaten die Kopplung verschiedener Bohrlochkomponenten mit der Bohrlochwand und/oder dem umgebenden Gestein zu bestimmen. Es ist im Sinne der Erfindung bevorzugt, dass die Verteilung der akustischen Impedanz und/oder der Kopplung der Materialien miteinander analysiert wird. Es kann auch bevorzugt sein, die Resonanzfrequenzen einzelner Bauteile zu untersuchen und/oder zu analysieren. Es werden vorzugsweise solche Signale ausgewertet, die ein Fluid oder eine andere Rauschquelle in der Umgebung des Bohrlochs, innerhalb und/oder außerhalb des Bohrlochs erzeugt, um eine Aussage über die mechanischen Eigenschaften des Materials und/oder der Vorrichtung machen zu können. Rauschquellen können beispielsweise auch Fahrzeuge, Wellen, Wind oder Erdbeben sein. Anders als bei den Methoden des *Fluid Tracking* werden im Rahmen des vorgeschlagenen Verfahrens wird beim vorgeschlagenen Verfahren nicht das Medium selbst gemessen, sondern ein anderes Medium, um eine Aussage über den nicht fließenden Zement beziehungsweise die Bohrlochkomponenten zu erhalten. Die Fluid können beispielsweise ausgewählt sein aus einer Gruppe umfassend Gas, Wasser und/oder Öl. Es ist im Sinne der Erfindung bevorzugt, dass es sich um Formationsfluide, Suspensionen, Emulsionen, Mischungen von Fluiden, Mischungen eines Fluides mit einem Feststoff, Mischungen eines Fluides mit einem Gas, Mischungen eines Gases mit einem Feststoff und/oder Zement, der zur Zementierung eines Abschnitts der Bohrung genutzt wird, handelt, ohne darauf beschränkt zu sein. Vorzugsweise kann jedes sich bewegende Medium im Bohrloch für die Messungen verwendet werden. Dabei werden die Messungen an dem Medium vorzugsweise nicht dafür genutzt, um das Medium selbst zu charakterisieren wie in *Fluid Tracking,* sondern um die anderen Bohrlochkomponenten zu charakterisieren.

Die passiven akustischen Messungen werden insbesondere nach Beendigung eines Verpumpens des Materials, beispielsweise des Zements, vorgenommen, beispielsweise nach dem Aushärten des Materials. Der Begriff "nach dem Aushärten" umfasst vorzugsweise auch die Zeitspanne nach Ende des Verpumpens, in der der Zement gegebenenfalls noch flüssig ist. Damit werden also vorzugsweise die mechanischen Eigenschaften fester Materialien untersucht. Der Begriff "nach dem Aushärten des Materials" bedeutet im Sinne der Erfindung bevorzugt "nach Beendigung des Verpump-Vorganges" beziehungsweise "wenn das Medium, welches für die Komplettierung genutzt wird, nicht mehr fließt". Tests haben gezeigt, dass es mit dem vorgeschlagenen Verfahren überraschenderweise auch möglich ist, das "Aushärten", also die Hydratation des Zementes, zu beobachten, das vorzugsweise mit einer Änderung der mechanischen Eigenschaften einhergeht.

Mit dem vorgeschlagenen Verfahren wird daher insbesondere eine Langzeitbeobachtung eines Bohrlochs hinsichtlich seiner Integrität möglich. Dies wird insbesondere dadurch möglich, dass eine zeitliche Änderung der Anbindung des Zementes an die Verrohrung, sowie eine zeitliche Änderung der elastischen Eigenschaften des Zementes im Ringraum ermittelt werden kann. Es kann im Sinne der Erfindung auch bevorzugt sein, dass anstatt oder neben Zement ein anderes aushärtendes und/oder dichtendes Material verwendet wird, um in das Bohrloch eingefüllt zu werden, um es zu stabilisieren. Es ist im Sinne der Erfindung besonders bevorzugt, wenn der Zement oder das zusätzliche aushärtende und/oder dichtende Material in einen Ringraum zwischen Verrohrung und Gebirge, Gestein und/oder Formation eingefüllt wird. Es ist im Sinne der Erfindung insbesondere bevorzugt, dass durch die Erfindung die Stabilität des Bohrlochs, sowie eine hydraulische Trennung verschiedener Gesteinsschichten erreicht werden kann.

Insbesondere wird im Kontext des vorgeschlagenen Verfahrens ein Messkabel in eine Bohrung oder ein Bohrloch eingebaut und eine akustische und/oder seismische Rauschamplitude gemessen. Der Begriff "akustisch" bezieht sich im Sinne der Erfindung bevorzugt auf die Bezeichnung "ortsverteilte akustische Messungen". Es ist im Sinne der Erfindung bevorzugt, dass insbesondere akustische und/oder seismische Messungen vorgenommen werden, wobei das vorgeschlagene Verfahren insbesondere auf einer Dehnungsmessung entlang des Messkabels beruht, die vorzugsweise "ortsverteilte Dehnungsmessungen" sind. Das Messsignal der akustischen und/oder seismischen Messungen sind Dehnungen und/oder Dehnungsänderungen des Materials und/oder der Vorrichtung. Vorteilhafterweise erlaubt eine zeitliche Integration die Ermittlung von Dehnungswerten auf Grundlage der gemessenen Dehnungen und/oder Dehnungsänderungen. Wenn Dehnungsänderungen als Messsignal verwendet werden, ist es im Sinne der Erfindung bevorzugt, dass eine Dehnungsänderungsamplitude und/oder eine Dehnungsänderungsamplitudenverteilung zur Ermittlung einer Verteilung einer akustischen Impedanz innerhalb des Materials und/oder der Vorrichtung verwendet wird, sowie beispielsweise auch zur Ermittlung einer Verteilung einer Materialkopplung oder von Resonanzfrequenzen. Wenn Dehnungsänderungen als Messsignal verwendet werden, ist es ferner bevorzugt, dass die Dehnungsänderungen ein zeitlich integriertes Dehnungssignal ergeben
Es ist im Sinne der Erfindung bevorzugt, dass eine Dehnungsamplitude in einem Frequenzbereich einer statischen Verformung bei 0 Hz bis in den Ultraschallbereich hinein gemessen wird.

Durch die Analyse der Dehnungsamplituden, Dehnungsamplitudenverteilung, Dehnungsänderungsamplitude und/oder Dehnungsänderungsamplitudenverteilung kann vorzugsweise auch eine mechanische Kopplung verschiedener Bohrlochkomponenten und der Bohrlochwand ermittelt werden. Der Begriff "Bohrlochkomponenten" bezeichnet im Sinne der Erfindung bevorzugt eine oder mehrere Verrohrungen und/oder eine oder mehrere Zementschichten innerhalb des Bohrlochs. Es ist im Sinne der Erfindung bevorzugt, bei dem vorgeschlagenen Verfahren einen Zentralisator einzusetzen, der beispielsweise von einem Zentrierkorb gebildet wird. Der Zentralisator ist vorzugsweise dazu eingerichtet, eine Verrohrung im Bohrloch zu zentrieren. Das Einbringen des Zentralisators erfolgt vorzugsweise vor dem Einfüllen des Zements, das vorteilhafterweise durch die Verwendung eines Zentralisators erleichtert wird.

Es ist im Sinne der Erfindung ferner bevorzugt, dass statische und/oder quasi-statische Signale ausgewertet werden. Mit dem Begriff "statisch" werden im Sinne der Erfindung bevorzugt solche Messungen bezeichnet, die bei einer Frequenz von 0 Hz durchgeführt werden. Der Begriff "quasi-statisch" bezeichnet Messungen bei sehr tiefen Frequenzen in der Nähe von 0 Hz.

Die Rauschamplitude wird beispielsweise durch einen Fluidstrom in der Bohrung, durch Bohraktivitäten im Bohrloch und/oder anthropogene oder natürliche Bodenunruhe erzeugt. Es ist im Sinne der Erfindung besonders bevorzugt, Bodenbewegungen zu untersuchen, d.h. bevorzugt eine anthropogene und natürliche Bodenunruhe (*ambient noise*)*.* Es ist im Sinne der Erfindung bevorzugt, dass impulsartige und/oder rauschartige Signale ausgewertet werden.

Insbesondere werden vorzugsweise ortsverteilte akustische Messungen durchgeführt, mit denen Dehnungsinformationen der untersuchten Gegenstände erhalten werden können. Es ist im Sinne der Erfindung insbesondere bevorzugt, ortsverteilte Dehnungsmessungen durchzuführen und diese in einem akustisch und/oder seismisch relevanten Frequenzbereich auszuwerten. Dabei ist es im Kontext des vorgeschlagenen Verfahrens bevorzugt, bei den seismischen und/oder akustischen Frequenzen insbesondere mittlere Rauschamplituden zu analysieren. Darüber hinaus können mit dem vorgeschlagenen Verfahren Resonanzfrequenzen ausgewertet werden, die im Sinne der Erfindung bevorzugt auch als charakteristische Frequenzen bezeichnet werden. Es kann im Sinne der Erfindung auch bevorzugt sein, quasi-statische Verformungen zu untersuchen, für die insbesondere Periodendauern im Bereich von Minuten, Stunden und/oder Tagen auftreten, ohne darauf beschränkt zu sein. Dafür können beispielsweise tatsächliche Amplituden der Einzelmessung ausgewertet werden, um eine Belastung auf den Zement und/oder die Verrohrung zu ermitteln. Es hat sich gezeigt, dass die Amplitudenverteilung mit zunehmender Tiefe des Bohrlochs unter anderem abhängig ist von der akustischen Impedanz des Materials beziehungsweise des Zements im Bohrloch, wobei es sich vorzugsweise um Zement im ausgehärteten Zustand handelt. Vorzugweise kann mit dem vorgeschlagenen Verfahren auch eine mechanische Kopplung einzelner Komponenten der Komplettierung miteinander und/oder mit der Formation untersucht werden. Der Begriff "ausgehärtet" wird im Sinne der Erfindung insbesondere als Zeitpunkt nach der Beendigung des Verpumpens verstanden. Es ist im Sinne der Erfindung bevorzugt, eine relative Verteilung der akustischen Impedanz und/oder der mechanischen Kopplung über die Messstrecke, d.h. bevorzugt entlang des Verlaufs des Messkabels, zu ermitteln. Dafür kann das Messkabel vorzugsweise direkt im Material eingebaut vorliegen oder nachträglich in das Bohrloch eingebracht werden. Dies kann beispielsweise dadurch erfolgen, dass das Messkabel im Bohrloch abgehangen wird oder am *Tubing* installiert wird. Anwendungstests haben gezeigt, dass mit dem vorgeschlagenen Verfahren auch eine Überwachung von weiter au-βen liegenden Ringräumen ermöglicht wird, insbesondere dann, wenn eine geeignete in-situ-Kalibration vorgenommen wird. Es ist im Sinne der Erfindung bevorzugt, dass eine solcher in-situ-Kalibration einen optionalen Verfahrensschritt in dem vorgeschlagenen Verfahren darstellt. Es ist im Sinne der Erfindung insbesondere bevorzugt, verschiedene Ringräume gleichzeitig zu überwachen. Dies kann beispielsweise von innen nach außen, aber auch von außen nach innen erfolgen.

Die Erfinder haben mit dem vorgeschlagenen Verfahren eine Möglichkeit gefunden, dass das natürliche Rauschen abgehört werden kann, wobei die Rauschamplitude vorteilhafterweise mit etwaigen Schwachstellen oder Änderungen von Materialeigenschaften innerhalb des Bohrlochs korreliert. Damit stellt die Erfindung eine wesentliche Abkehr vom Stand der Technik dar, in dem bisher davon ausgegangen war, dass beispielsweise das Umgebungsrauschen einen Störfaktor bei akustischen Messungen darstellt. Im Kontext des vorliegenden Verfahrens werden Umgebungssignale aber bewusst ausgenutzt und durch die passiven akustischen Messungen verwendet, um das mechanische und/oder elastische Verhalten des Materials oder von Vorrichtungen im Bohrloch zu untersuchen und Rückschlüsse über etwaige Stabilitätsschwachstellen oder Änderungen von Materialeigenschaften in Ort und/oder Zeit innerhalb des Bohrlochs ziehen zu können. Bei herkömmlichen Verfahren, die im Stand der Technik bekannt sind, werden die erhobenen Daten in der Regel hinsichtlich der Fluideigenschaften des fließenden Mediums ausgewertet. Im Kontext der vorliegenden Erfindung ist es dahingegen bevorzugt, das Rauschen auszunutzen, welches durch das fließende Medium hervorgerufen wird, um eine Aussage über die Bohrlochkomplettierung zu treffen.

Die Erfindung betrifft insofern insbesondere eine konkrete und spezielle Anwendung von faseroptischen ortsverteilten akustischen Messungen zur Bewertung der Integrität eines Bohrlochs, wobei die Messungen insbesondere nach dem Aushärten eines Materials erfolgen, das in ein Bohrloch zur Erhöhung der Stabilität und zur hydraulischen Abdichtung eingebracht werden kann, wie zum Beispiel Zement. In Abwendung vom Stand der Technik wird hierbei nicht ein Signal verwendet, das von einem flüssigen und fließenden Material oder einem Fluid erzeugt wird, um Aussagen über das flüssige und fließende Material und/oder das Fluid selbst zu machen, sondern es werden die Ergebnisse der passiven akustischen oder seismischen Dehnungsmessungen verwendet, um eine Aussage über den Zustand des Bohrlochs zu einem späteren Zeitpunkt, insbesondere nach dem Einbau bis zur Aufgabe der Bohrung, machen zu können. Es ist im Sinne der Erfindung insbesondere bevorzugt, dass das Rauschen des fließenden Mediums genutzt wird, um Aussagen über die "statische" Komplettierung zu machen. Ferner können mit dem vorgeschlagenen Verfahren Materialeigenschaften von Bohrlochkomponenten untersucht werden. Dadurch wird vorteilhafterweise auch eine Abschätzung von dynamischen und/oder statischen Lastszenarien ermöglicht, sowie eine Echtzeit-Analyse der Material- und/oder Vorrichtungsintegrität über den vorzugsweise gesamten Lebenszyklus einer Bohrung oder eines Bohrungsfeldes. Ein besonderer Vorteil des vorgeschlagenen Verfahrens besteht darin, dass es zerstörungsfrei und nicht-invasiv durchgeführt werden kann. Es ist im Sinne der Erfindung bevorzugt, dass das vorgeschlagene System auch dazu verwendet werden kann, verschiedene Arten von anthropogenen Untergrundstrukturen zu überwachen, wie beispielsweise Tunnel oder Schächte. Darüber hinaus ermöglicht das vorgeschlagene Verfahren, verschiedene geologische Formationen, Horizonte und/ oder Schichten mit unterschiedlichen Fluiden und/oder Drücken oder verschiedene Komponenten des Bohrlochs, wie beispielsweise Verrohrung, Bohrlochwand und/oder verschiedene Verrohrungen gegeneinander, hydraulisch zu isolieren und/oder abzudichten, sowie die unerwünschte Migration von Fluiden entlang der Bohrung im Unterrund zu verhindern.

Das Abhören bzw. Messen des natürlichen Rauschens wird bevorzugt dadurch erreicht, dass das vorgeschlagene Verfahren rein passiv ist in dem Sinne, dass vorzugsweise keine aktive Signalanregung benötigt wird. Die nutzbaren Quellsignale können ausgewählt sein aus einer Gruppe umfassend Vibration eines Bohrstrangs, Rotation eines Bohrstrangs, Fluidfluss, Migration eines Fluides in der Bohrung, Umgebungsrauschen, künstliche Quellen, thermische Belastung von Bohrlochkomponenten, thermische Expansion von Bohrlochkomponenten, Druckänderungen in dem Bohrloch, Druckänderungen in einem umgebenden Gestein, Gewichtsänderungen und/oder Änderungen der Auflast auf das Bohrloch von der Oberfläche. Die Quellsignale der thermischen Belastung von Bohrlochkomponenten, der thermischen Expansion von Bohrlochkomponenten, der Druckänderungen in dem Bohrloch oder der Druckänderungen in einem umgebenden Gestein werden vorzugsweise insbesondere im Kontext der quasi-statischen Verformungen ausgewertet, der vorzugsweise absolute Amplituden der Einzelmessungen zugrunde liegen. Beim Umgebungsrauschen kann es sich beispielsweise um Wind, anthropogene Aktivitäten und/oder Wellen handeln, ohne darauf beschränkt zu sein. Künstliche Quellen werden zum Beispiel von Explosionen oder Vibro-seis-Anwendungen gebildet; Änderungen der Auflast auf die Bohrung beispielsweise durch Arbeiten am Bohrturm. Die Analyse und/oder die Auswertung des natürlichen Rauschens ermöglichen, dass im Lichte der erhaltenen Informationen Konsequenzen gezogen werden, die vorteilhafterweise zu einer Vermeidung von Materialermüdung und zu einer höheren Standsicherheit des Bohrlochs führen. Daraus resultiert ein reduziertes Risiko für alle Personen, die im Umfeld des Bohrlochs arbeiten. Neben dem Risiko für den Menschen wird mit dem vorgeschlagenen Verfahren vorteilhafterweise auch das Risiko für die Umwelt minimiert. Insbesondere kann durch die Anwendung des vorgeschlagenen Verfahrens eine Reduktion für Bohrlochschädigung, eine Verminderung von Reparaturkosten und ein reduzierter Ausfall der Bohrung erreicht werden.

Es ist im Sinne der Erfindung ganz besonders bevorzugt, dass das Material Zement umfasst beziehungsweise dass das Material teilweise, überwiegend oder im Wesentlichen vollständig von Zement gebildet wird. Es kann im Sinne der Erfindung auch bevorzugt sein, ein anderes aushärtendes und/oder dichtendes Material zu verwenden. Vorzugsweise befindet sich das Material zum Zeitpunkt der Messungen im ausgehärteten Zustand. Vorzugsweise fliest das zu analysierende Medium selbst nicht. Es ist im Sinne der Erfindung ferner bevorzugt, dass die Vorrichtung von der Verrohrung in dem Bohrloch und/oder einem Bohrstrang gebildet wird. Mit dem vorgeschlagenen Verfahren werden vorzugsweise passive akustische Signale ausgewertet, um mechanische Eigenschaften des vorzugsweise statischen Bauwerks eines Bohrloches mit seinen verschiedenen möglichen Teilkomponenten, wie Rohrtouren und/oder unterschiedlichen Zementschichten, zu analysieren, wobei die Messungen im Rahmen des vorgeschlagenen Verfahrens insbesondere nach dem Aushärten des Materials, insbesondere des Zements, durchgeführt werden. Es ist im Sinne der Erfindung ganz besonders bevorzugt, wenn es sich bei den akustischen Messungen um Dehnungsmessungen im Messkabel handelt, die es vorteilhafterweise erlauben, die mechanischen Eigenschaften der Komponenten im Bohrloch zu bestimmen. Es ist besonders bevorzugt, dass Messungen mit sehr hohen Frequenzen des Laserstrahls durchgeführt werden, wobei es im Sinne der Erfindung insbesondere bevorzugt ist, dass Dehnungssignale aufweisend eine Frequenz in einem bevorzugten Bereich von f1 « 1 Hz und f2 > 1 kHz mit dem Verfahren ausgewertet werden. Es ist im Sinne der Erfindung ebenso bevorzugt, Messungen in einem Frequenzbereich von 1 - 250 Hz durchzuführen. Bezogen auf eine zumindest teilweise periodische Änderungsrate können vorzugsweise Signale mit einer (dominanten) Frequenz im Bereich von 0,01 Hz bis 2 Gigahertz (GHz) gemessen werden. Besonders bevorzugt ist der Bereich von 0,01 Hz bis 100 MHz, stärker bevorzugt 0,01 Hz bis 10 MHz, noch stärker bevorzugt 0,01 Hz bis 1 MHz, stark bevorzugt 0,01 Hz bis 100 kHz und insbesondere 0,01 Hz bis 20 Kilohertz (kHz). Passive akustische Messungen in den genannten Frequenzbereichen haben sich als besonders geeignet erwiesen, um Bereiche des Bohrlochs, an dem Materialermüdung auftreten kann, besonders sicher und im Vorhinein identifizieren zu können. Es ist bevorzugt, dass bei dem vorgeschlagenen Verfahren ein Messinstrument eingesetzt wird, das bevorzugt dazu eingerichtet ist, Dehnungsdaten entlang des Messkabels zu messen. Dazu können vorzugsweise Laserpulse und/oder Laser-Frequenz-Sweeps eingesetzt werden, ohne darauf beschränkt zu sein.

Es ist im Sinne der Erfindung bevorzugt, dass die Verteilung einer akustischen Impedanz und/oder die mechanische Kopplung von Bohrloch-Komponenten verwendet wird, um Bereiche im Bohrloch zu bestimmen, an denen eine erhöhte Wahrscheinlichkeit für ein Auftreten von Materialermüdung besteht. Es ist im Sinne der Erfindung bevorzugt, dass der Begriff "Impedanz" als Summe aller Widerstände verstanden wird, die einer Ausbreitung von Schwingungen entgegenwirken können beziehungsweise im seismischen Sinn als Produkt aus Wellengeschwindigkeit und Materialdichte. Es kann ferner bevorzugt sein, dass das Verfahren eine Lokalisierung von Bereichen umfasst, in denen eine erhöhte Wahrscheinlichkeit für eine gute hydraulische Abdichtung besteht. Das vorgeschlagene Verfahren kann vorzugsweise auch verwendet werden, um eine Zementbindung entlang des Bohrlochs zu quantifizieren.

Vorzugsweise werden insbesondere die mittleren Rauschamplituden ausgewertet, um festzustellen, in welchen Tiefenbereichen im Bohrloch mechanische Beanspruchungen des Materials und/oder der Vorrichtung vorliegen, die gegebenenfalls zu Problemen hinsichtlich der Integrität des Bohrlochs führen können. Es ist im Sinne der Erfindung ebenfalls bevorzugt, solche Stellen zu ermitteln, welche beispielsweise schadhaft fertiggestellt wurden oder die eine Fehlstelle entwickeln. Dies kann beispielsweise dadurch indiziert sein, dass auffällige Dehnungen und/oder Vibrationen im Material und/oder in Zusammenhang mit der Vorrichtung ermittelt werden. Beispielsweise kann in Bereichen, die eine erhöhte Vibration aufweisen, die mechanische Kopplung zwischen dem Material und der Vorrichtung vermindert sein. Wenn das Material beispielsweise Zement ist und die Vorrichtung die Verrohrung innerhalb des Bohrlochs, so kann beispielsweise der Kontakt zwischen Zement und Verrohrung in dem ermittelten Bereich der auffälligen Vibration vermindert sein. Es hat sich gezeigt, dass die Kopplung von den mechanischen Eigenschaften des Materials und/oder der Vorrichtung abhängt, weswegen die mechanischen Eigenschaften als Indikator für die Kopplungsgüte verwendet werden können. Es ist im Sinne der Erfindung bevorzugt, dass eine Superposition von Impedanz und Kopplung die Rauschamplitude und/oder charakteristische Frequenzen bestimmt. Bei den mechanischen Eigenschaften handelt es sich insbesondere um die Dehnung des Materials und/oder der Vorrichtung, welche mit den akustischen Messungen, die im Rahmen des vorgeschlagenen Verfahrens durchgeführt werden, ermittelbar sind. Es ist im Sinne der Erfindung bevorzugt, dass der Begriff "akustische Messung" bevorzug für Dehnungsmessungen in einem Frequenzbereich von 0 Hz bis in den Ultraschallbereich verwendet wird. Die Auswertung der mittleren Rauschamplituden kann beispielsweise durch Ermittlung eines Root Mean Square-Werts (RMS) aus Messreihen mit einer Dauer von 1 min erfolgen, wobei die Messdauer vorzugsweise auch länger oder kürzer sein kann. Für sogenannte "Impakt"-Signale, wie beispielsweise Erdbeben, kann eine Messdauer von nur wenigen Sekunden bevorzugt sein.

Die Messungen finden nach Beendigung eines Verpumpens des Materials statt, wobei die Messkabel zur Durchführung der akustischen Messungen vorzugsweise permanent oder temporär in dem Bohrloch eingebracht vorliegen. Es ist im Sinne der Erfindung bevorzugt, dass eine permanente Installation der Messkabel innerhalb des Bohrlochs erfolgt, insbesondere wenn die mechanischen Eigenschaften des Materials, insbesondere des Zements, untersucht werden soll. Vorzugsweise kann das faseroptische Messkabel dazu in dem Material in dem Bohrloch angeordnet vorliegen, wobei es insbesondere permanent in dem Bohrloch vorliegt. Es ist ferner bevorzugt, dass das Messkabel in axialer Richtung in der Bohrung eingebaut ist. Es kann auch bevorzugt sein, dass mehrere Messkabel verteilt um eine Bohrlochachse angeordnet sind. Es ist insbesondere bevorzugt, dass die mechanischen Eigenschaften des Zementes hinter der Verrohrung in einem Bohrloch mittels faseroptischen ortsverteilten Dehnungsmessungen ermittelt werden. Vorzugsweise wird dazu ein faseroptisches Messkabel permanent in eine Bohrung eingebaut und dazu genutzt, um ortsverteilte Dehnungsmessungen aufzuzeichnen. Dabei werden insbesondere die statische Verformung und/oder die dynamische Verformung des Materials und/oder der Vorrichtung genutzt, um die Anbindung des Materials an die Vorrichtung zu ermitteln. Vorzugsweise umfasst die Ermittlung einer Dehnung des Materials und/oder der Vorrichtung im Rahmen des vorgeschlagenen Verfahrens die Erfassung von statischen und/oder dynamischen Verformungen des Materials und/oder der Vorrichtung. Dadurch wird vorteilhafterweise eine dynamische Lastmessung ortsverteilt möglich. Insbesondere kann die Anbindung eines verpumpten Zements an die Verrohrung in einem Bohrloch mit den bevorzugt ortsverteilten Dehnungsmessungen ermittelt werden, sowie seine Materialeigenschaften. Auf diese Weise wird es vorteilhafterweise möglich, Bereiche in dem Bohrloch zu identifizieren, in denen eine erhöhte Wahrscheinlichkeit für eine Materialermüdung besteht.

Es ist im Sinne der Erfindung ferner bevorzugt, die Elastizität des Materials, insbesondere des Zementes, in verschiedenen Ringräumen innerhalb des Bohrlochs zu ermitteln. Der Begriff "Ringraum" wird im Sinne der Erfindung bevorzugt synonym mit dem Begriff "Ringspalt" verwendet und bezeichnet bevorzugt den Raum in einem Bohrloch hinter der Verrohrung. Vorzugsweise wird die Elastizität des Materials, der Verrohrung und/oder einer weiteren Bohrlochkomponente durch die physikalischen Größen des E-Moduls und/oder des *Young's modulus* definiert. Es ist im Sinne der Erfindung bevorzugt, dass die Elastizität des Materials über eine Analyse des Amplitudenspektrums in unterschiedlichen Tiefen innerhalb des Bohrlochs ermittelt wird. Es ist im Sinne der Erfindung bevorzugt, dass im Rahmen des vorgeschlagenen Verfahrens statische Messungen mit einer Frequenz von im Wesentlichen 0 Hz durchgeführt werden und/oder dynamische Messungen, die mit einer bestimmten Frequenz durchgeführt werden. Es ist im Sinne der Erfindung bevorzugt, dass die dynamischen Messungen die Ermittlung eines Root Mean Square-Werts (RMS) umfassen, während bei den statischen Messungen vorzugsweise eine tatsächliche Amplitude von Einzelmessungen ausgewertet wird.

Ein besonderes Verdienst der Erfindung besteht darin, dass passive akustisch Messungen innerhalb des Bohrlochs durchgeführt werden, um eine Dehnung des Materials und/oder der Vorrichtung zu ermitteln. Es ist im Sinne der Erfindung bevorzugt, dass sich der Begriff "passiv" auf die Erzeugung des akustischen Signals bezieht, und nicht auf ein Abtasten und/oder Auslesen des Messkabels. Vorzugsweise werden im Rahmen des vorgeschlagenen Verfahrens insbesondere Laserpulse verwendet, um das akustische Signal abzutasten. Es war vollkommen überraschend, dass mit den vorgeschlagenen Schritten ein Verfahren zur Überwachung eines Materials und/oder einer Vorrichtung in einem Bohrloch bereitgestellt werden kann, dass ohne die Notwendigkeit eines aktiven Quellsignals durchgeführt werden kann. Der Begriff "passiv" kann im Sinne der Erfindung bevorzugt als "ohne die Verwendung eines aktiven Quellsignals" oder "unter Ausnutzung des natürlichen Rauschens" verstanden werden.

Es kann im Sinne der Erfindung auch bevorzugt sein, dass das Messkabel zur Durchführung der akustischen Messungen vorzugsweise temporär in dem Bohrloch eingebracht vorliegt. Dies kann beispielsweise dadurch erreicht werden, dass das faseroptische Messkabel in dem Bohrloch abgehangen wird und/oder in Verbindung mit einer (bevorzugt temporären) Verrohrung in dem Bohrloch verwendet wird. Es ist im Sinne der Erfindung bevorzugt, dass das Messkabel in axialer Richtung in eine Bohrung eingebaut wird. Vorzugsweise ist das faseroptische Messkabel temporär in dem Bohrloch eingebracht, wobei das Messkabel insbesondere dazu eingerichtet ist, ortsverteilte Dehnungsmessungen aufzuzeichnen. Es ist im Sinne der Erfindung besonders bevorzugt, dass die ortsverteilten Dehnungsmessungen entlang des Messkabels durchgeführt werden.

Vorzugsweise können die akustischen Messungen, die im Rahmen des vorgeschlagenen Verfahrens durchgeführt werden, in unterschiedlichen Tiefen in dem Bohrloch durchgeführt werden. Dies ist besonders vorteilhaft, um eine besonders gute räumliche Auflösung der passiven akustischen Messungen zu erhalten. Die passiven akustischen Messungen, bei denen es sich vorzugsweise um Dehnungsmessungen handelt, sind im Sinne der Erfindung insbesondere ortsverteilt, wobei die Anbindung des Zements an die Verrohrung innerhalb des Bohrlochs, sowie die Elastizität des Zements insbesondere in Ringräumen gemessen wird. Vorzugsweise liegen der Zement und/oder das abdichtende Material insbesondere im Ringraum des Bohrlochs vor. Es kann allerdings auch bevorzugt sein, eine Bohrung mit dem Material und/oder dem Zement im Inneren zu verfüllen. Tests haben gezeigt, dass vorteilhafterweise auch solche Verfüllungen mit dem vorgeschlagenen Verfahren überwacht werden können. Es ist im Sinne der Erfindung insbesondere bevorzugt, dass die Elastizität und/oder die Verformung auch für andere Bohrlochkomponenten ermittelt werden kann.

Es ist im Sinne der Erfindung insbesondere bevorzugt, dass eine Verarbeitung der Dehnungsinformationen ein Filtern, eine Analyse und/oder eine Aufzeichnung der Dehnungsinformationen umfasst. Es ist im Sinne der Erfindung bevorzugt, dass hinsichtlich der mechanischen Eigenschaften des Zements temporäre und permanente Messungen vorgenommen werden können, wobei der Begriff "temporäre Messung" vorzugsweise bedeutet, dass das Messkabel in ein Bohrloch abgehängt wird und der Begriff "permanente Messung" vorzugsweise bedeutet, dass das Messkabel permanent im Bohrloch eingebaut ist, beispielsweise indem es im Material, dessen mechanische Eigenschaften untersucht werden sollen, eingegossen ist. Es ist ferner bevorzugt, dass das vorgeschlagene Verfahren hinsichtlich der Verrohrung als Verfahren zur Messung von mechanischen Eigenschaften von Bohrlochverrohrungen verstanden werden kann, wobei faseroptisch-basierte Dehnungsmessungen ohne die Notwendigkeit eines aktiven Quellsignals durchgeführt werden. Es ist in dieser Ausführungsform der Erfindung bevorzugt, dass ein faseroptisches Messkabel permanent entlang einer Rohrtour mittels geeigneter Kabelschellen kraftbündig installiert wird. Dabei kann die Rohrtour vorzugsweise zementiert oder unzementiert vorliegen. Ferner ist es in dieser Ausführungsform der Erfindung bevorzugt, dass elastische Eigenschaften der Verrohrung detektiert werden können, sowie deren zeitliche Änderung. Vorteilhafterweise können somit Materialermüdung und/oder Ermüdungsbrüche in der Verrohrung detektiert werden. Insbesondere werden dynamische Dehnungsdaten, die bei Frequenzen von f >> 1 Hz aufgenommen werden, ausgenutzt, um elastische Eigenschaften des Zementes hinter der Verrohrung auch in mehreren Ringräumen ermitteln zu können. Vorzugsweise können sowohl niederfrequente Signale, als auch hochfrequente Dehnungssignale zur Analyse genutzt werden, um insbesondere mittlere und maximale Deformationen zu ermitteln. Der Begriff "niederfrequent" wird im Sinne der Erfindung so verstanden, dass damit Frequenzen von f << 1 Hz gemeint sind, während der Begriff "hochfrequent" bevorzugt so verstanden wird, dass damit Frequenzen von f > 1 kHz gemeint sind.

Darüber hinaus betrifft die Erfindung hinsichtlich des Bohrstrangs bevorzugt ein Verfahren zur Messung der dynamischen Belastung eines Bohrstrangs während des Bohrverfahrens, wobei vorzugsweise faseroptische Dehnungsmessungen eines permanent installierten Kabels hinter der Verrohrung im vorherigen Bohrabschnitt durchgeführt werden. Es ist in dieser Ausführungsform der Erfindung bevorzugt, dass ein faseroptisches Messkabel dazu genutzt wird, um bevorzugt ortsverteilte Dehnungsmessungen, insbesondere eine dynamische Verformung, aufzuzeichnen, die vorteilhafterweise genutzt werden kann, um die charakteristischen Resonanzfrequenzen eines Bohrstrangs während des Bohrprozesses zu ermitteln. Dabei kann es sich insbesondere um die harmonischen Resonanzfrequenzen des Bohrstrangs handeln. Auch in dieser Ausführungsform der Erfindung ist es bevorzugt, dass ein faseroptisches Messkabel permanent entlang einer Rohrtour mittels geeigneter Kabelschellen kraftbündig installiert wird, wobei die Rohrtour vorzugsweise zementiert oder unzementiert vorliegen kann.

Es ist in dieser Ausführungsform der Erfindung bevorzugt, dass die Daten, die mit Hilfe des faseroptischen Dehnungsmessgeräts aufgenommen werden, verarbeitet, gefiltert und/oder analysiert werden können, um lokale Dehnungsinformationen entlang des Kabels zu ermitteln. Es ist im Sinne der Erfindung insbesondere bevorzugt, dass ein Dehnungsmessgerät von einem oder mehreren Messkabeln gebildet wird, wobei die Messkabel vorzugsweise an ein Messinstrument zur Ermittlung faseroptischer ortsverteilte Dehnungsmessungen, d.h. im Sinne der Erfindung "akustischen Messungen", angeschlossen ist. Es werden insbesondere passive akustische Messungen durchgeführt, bei denen das Signal vorzugsweise durch Vibration eines Bohrstrangs, Rotation eines Bohrstrangs und/oder Reibung von Rohrverbindern verursacht und/erzeugt wird. Es ist bevorzugt, dass das Frequenzspektrum des aufgezeichneten Signals genutzt wird, um Resonanzfrequenzen und/oder Resonanzamplituden im Bohrstrang zu messen. Insbesondere kann auch eine zeitliche Änderung der elastischen Eigenschaften detektiert werden. Vorzugsweise werden im Rahmen dieser Ausführungsform der Erfindung Materialermüdung und/oder Ermüdungsbrüche im Bohrstrang und an Rohrverbindern detektiert. Es ist im Sinne der Erfindung bevorzugt, dass die dynamischen Dehnungsdaten genutzt werden, um elastische Eigenschaften des Bohrstrangs zu ermitteln. Dabei werden die dynamischen Dehnungsdaten insbesondere bei Frequenzen von f > 1 Hz ermittelt.

In einer Ausführungsform der Erfindung ist es bevorzugt, dass Daten, die vorzugsweise mit dem faseroptisch-basierten Dehnungsmessgerät ermittelt werden, verarbeitet, gefiltert und analysiert werden, um lokale Dehnungsinformationen des Materials und/oder der Vorrichtung zu ermitteln. Diese Dehnungsinformationen können insbesondere die Dehnung des Materials und/oder der Vorrichtung betreffen oder Dehnungsänderungen derselben. Die Verarbeitung der Daten ermöglicht vorzugsweise eine Auswertung mit dem Ziel, solche Bereiche innerhalb des Bohrlochs zu identifizieren, an denen eine erhöhte Wahrscheinlichkeit für das Auftreten einer Materialermüdung vorliegt. Es ist im Sinne der Erfindung insbesondere bevorzugt, dass lokale Dehnungsamplituden genutzt werden, um Dehnungen im Material, welches das Kabel umgibt, zu quantifizieren. Es ist ferner bevorzugt, dass die Dehnungsinformationen genutzt werden, um mit Hilfe des Hookeschen Gesetzes elastische und/oder mechanische Eigenschaften der Materialien und/oder der Vorrichtungen im Bohrloch zu berechnen. Mit dem vorgeschlagenen Verfahren und dem vorgeschlagenen System ist es vorzugsweise möglich, die Anbindung des Zementes an die Verrohrung, sowie die elastischen und/oder mechanischen Eigenschaften des Zementes in einem Ringraum zu detektieren. Vorteilhafterweise ermöglicht es das vorgeschlagene Verfahren auch, Aussagen über die Verrohrung zu treffen.

Es ist im Sinne der Erfindung insbesondere bevorzugt, dass eine zeitliche Änderung der Anbindung des Zementes an die Verrohrung, sowie der elastischen Eigenschaften des Zementes im Ringraum detektieren werden kann. Ein solche zeitliche Änderung der Anbindung des Zementes an die Verrohrung und die elastischen und/oder mechanischen Eigenschaften des Zementes können insbesondere auch in mehreren Ringräumen einer Bohrung detektieren werden. Vorzugsweise kann mit dem vorgeschlagenen Verfahren und mit dem vorgeschlagenen System Materialermüdung und/oder Ermüdungsbrüche im Zement detektiert werden. Dabei können vorzugsweise Bereich mit einer erhöhten Gefahr für Materialermüdung und/oder Ermüdungsbrüche in mehreren Schichten des Zements identifiziert werden. Es ist im Sinne der Erfindung insbesondere bevorzugt, dass sowohl niederfrequente Signale mit vorzugsweise f << 1 Hz, als auch hochfrequente Dehnungssignale mit f > 1 kHz zur Analyse der vorzugsweise mit den passiven akustischen Messungen erhaltenen Daten genutzt werden können, um insbesondere mittlere und/oder maximale Deformationen innerhalb des Bohrlochs zu ermitteln.

In einem weiteren Aspekt betrifft die Erfindung ein System zur Durchführung des vorgeschlagenen Verfahrens, wobei das System ein faseroptisches Messkabel umfasst, das in ein Bohrloch eingebracht vorliegt, wobei in dem Bohrloch ein Material und eine Vorrichtung vorliegen. Dabei kann die Vorrichtung vorzugsweise ein Bohrstrang und/oder eine Verrohrung und/oder das Material Zement umfassen. Das System ist dadurch gekennzeichnet, dass das faseroptische Messkabel dazu eingerichtet ist, mittels passiver akustischer Messungen Dehnungsinformationen hinsichtlich des Materials und/oder der Vorrichtung nach Aushärten des Materials zu ermitteln. Die für das Verfahren beschriebenen Definitionen, technischen Wirkungen und Vorteile gelten für das vorgeschlagene System analog.

Der durchschnittliche Fachmann erkennt, dass technische Merkmale, Definitionen und Vorteile bevorzugter Ausführungsformen der beschriebenen, erfindungsgemäßen Verfahren und des obenstehend beschriebenen Systems auch für das hier beschriebene, erfindungsgemäße System gelten.

Es ist im Sinne der Erfindung bevorzugt, dass das System ein Dehnungsmessgerät zur Verarbeitung der Dehnungsinformationen umfasst. Vorzugsweise kann ein faseroptisches Dehnungsmessgerät an das Messkabel angeschlossen sein, um die bevorzugt ortsverteilten Dehnungsinformationen aufzuzeichnen, die vorzugsweise auch Dehnungsänderungen umfassen können.

Es ist im Sinne der Erfindung bevorzugt, dass das System eine Vorrichtung zur Erzeugung der Laserimpulse umfasst, die im Rahmen des vorgeschlagenen Verfahrens verwendet werden, um ein akustisches Signal abzutasten. Der Begriff "ein akustisches Signal abtasten" wird im Sinne der Erfindung bevorzugt synonym verwendet für die Ermittlung der Verformung des mindestens einen Messkabels. Darüber hinaus ist es bevorzugt, dass das vorgeschlagene System eine Vorrichtung zu Detektion und/oder Verarbeitung der Signale aufweist, die beim Auslesen des Messkabels erhalten werden.

Es ist im Sinne der Erfindung insbesondere bevorzugt, dass das System einen Zentralisator zur Zentralisierung einer Verrohrung im Bohrloch umfasst. Vorzugsweise wird dieser Zentralisator, der eine optionale Komponente des Systems darstellt, von einem Zentrierkorb gebildet.

### Detaillierte Beschreibung

Im Folgenden soll die Erfindung an Hand von Beispielen näher erläutert werden, ohne auf diese beschränkt zu sein.

### Kurzbeschreibung der Abbildungen

- **Figur 1**: Illustration eines beispielhaften Datensatzes, der während der Arbeiten in der Bohrung ermittelt wurde.
- **Figur 2**: Amplitudenspektrum der in Abbildung 1 markierten Signale.
- **Figur 3**: Normalisierte Rauschamplituden aufgezeichnet während verschiedener Arbeiten in der Bohrung zusammen mit normalisierten CBL Amplituden und Differenz zwischen CBL Daten und normalisierten Rauschamplituden.
- **Figur 4**: Darstellung einer bevorzugten Ausführungsform der Erfindung.
- **Figur 5**: Darstellung einer bevorzugten Ausführungsform der Erfindung.
- **Figur 6**: Darstellung einer bevorzugten Ausführungsform der Erfindung.
- **Figur 7**: Darstellung einer bevorzugten Ausführungsform der Erfindung.

### Versuchsaufbau und -ablauf

Ein Anwendungsbeispiel für das Verfahren wird in der Publikation [1] gegeben. In diesem Anwendungsbeispiel wurde ein faseroptisches Messkabel zusammen mit der 355 m langen 47,30 cm (18 5/8 ") Ankerrohrfahrt bzw. Verrohrung einer kommerziellen, geothermischen Bohrung eingebaut. Das Messkabel wurde mittels eines Umreifungsgerätes an der Rohrfahrt bzw. Verrohrung befestigt. Nach dem Einbau der Rohrfahrt wurde der Ringraum zwischen Rohrfahrt und Gebirge bzw. Gestein, bzw. einer weiter außen liegenden Rohrfahrt mit Zement als Stützmaterial verfüllt, bzw. wurde Zement in den Ringraum verpresst, sodass der Ringraum über die gesamte Länge mit Zement gefüllt ist. Hierbei wurde das Messkabel vollständig von Zement umflossen und durch die Aushärtung mechanisch an den Zement angekoppelt bzw. in Verbindung gebracht.

Im Anschluss an die Installation der Ankerrohrfahrt wurde der nächste Abschnitt bis zu einer Teufe (bevorzugter Ausdruck der Tiefe im Bergbau) von 1019 m erbohrt und mit einer 33,97 cm (13 3/8") Produktionsrohrfahrt bzw. -verrohrung ausgebaut. Der Ringraum hinter der 33,97 cm (13 3/8") Rohrfahrt wurde wieder über die gesamte Länge mit Zement gefüllt. In einem weiteren Abschnitt wurde das Reservoirintervall mit einem 31,11 cm (12 1/4") Bohrmeißel erbohrt.

Entlang des Messkabels wurden während der Bohrarbeiten in -2200m Tiefe entlang des faseroptischen Messkabels ortsverteilte Dehnungsdaten aufgezeichnet. Darüber hinaus wurden Dehnungsdaten sowohl während eines Injektionstests als auch während der Zeit eines vollständigen Bohrungseinschlusses ermittelt.

### Messverfahren

Entlang des faseroptischen Messkabels wurden ortsverteilte Dehnungsmessungen (engl.: *distributed strain sensing* - *DSS*) durchgeführt. Wenn die Abtastrate hoch genug ist um seismische oder akustische Signale erfassen zu können, wird das Messverfahren auch häufig als ortsverteilte akustische Messung (engl.: *distributed acoustic sensing* - *DAS*) oder ortsverteilte Vibrationsmessung (engl.: *distributed vibration sensing* - *DVS*) bezeichnet. Das zugrunde liegende Messprinzip ist hierbei in der Regel die Messung von Phasenänderungen des rückgestreuten Lichts entlang einer Glasfaser [2]. Betrachtet man zwei voneinander getrennte Streuzentren in einer Glasfaser, kann z.B. mit Hilfe eines Mach Zehnder Interferometers, der Phasenunterschied von rückgestreutem Licht dieser Streuzentren ermittelt werden. Verändert sich nun zwischen aufeinander folgenden Laserpulsen der Abstand zwischen diesen Streuzentren durch Dehnung oder Stauchung der Faser, ändert dies auch den Phasenunterschied des rückgestreuten Lichts. Diese und weitere faseroptische Dehnungsmessverfahren sind eingehend in der Literatur beschrieben, beispielsweise in [3] und [4].

### Ergebnisse

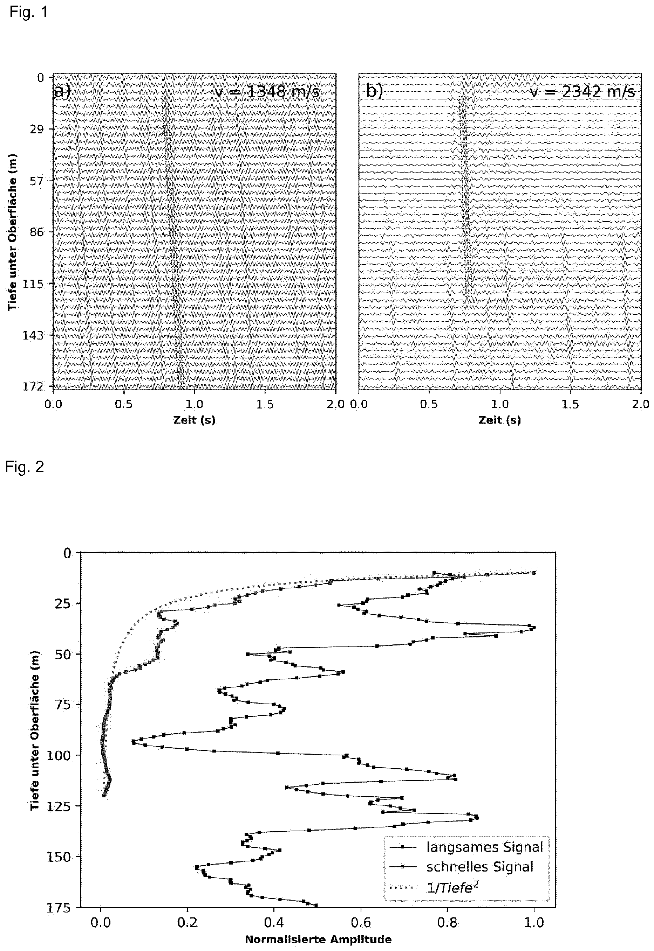

Zwei Beispiele für einen typischen Datensatz sind in **Abbildung 1** [1] gegeben. In den Daten lassen sich periodische Signale erkennen. Die markierten Bereiche wurden zur Ermittlung der Signalgeschwindigkeit und Charakteristik genutzt. In **Abbildung 1a)** ist ein Signal mit einer Fortpflanzungsgeschwindigkeit von 1348 m/s zu erkennen. In **Abbildung 2** [1] ist die Amplitudenverteilung mit der Teufe für die Signale aus Abbildung 1 zu sehen. In der **Abbildung 1b****)** ist ein deutlich schnelleres Signal zu erkennen, welches mit der Tiefe an Amplitude abnimmt (Abbildung 2). Die Amplitudenabnahme entspricht etwa dem Verhältnis 1/Teufe².

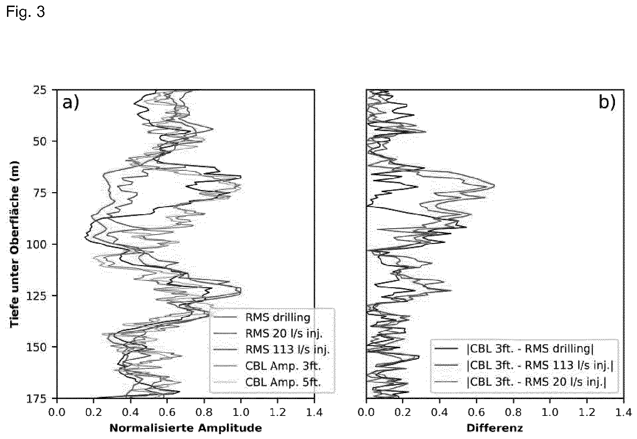

**Abbildung 3** [1] zeigt im Gegensatz zu Abbildung 2 nicht die Signalamplitude zu einem bestimmten Signal, sondern die mittlere Rauschamplitude über einen Zeitraum von 20 Minuten im Frequenzbereich 30-60 Hz. Es werden gezeigt normalisierte Rauschamplituden, die während verschiedener Arbeiten in der Bohrung zusammen mit normalisierten Zement Bond Log (CBL) Amplituden (links) aufgezeichnet wurden. Rechts wird die Differenz zwischen CBL Daten und normalisierten Rauschamplituden gezeigt. Die Daten wurden während der Bohrarbeiten und während eines Injektionstest mit 9l/s und 113l/s erhoben, analysiert und verglichen. Zusätzlich hierzu sind Daten eines konventionellen *Zement-Bond Logs* (CBL) gezeigt.

Die normalisierte Amplitude der CBL Daten zeigt über einen großen Teufenbereich ähnliche Trends wie die normalisierte Rauschamplitude, die aus den faseroptischen Messdaten ermittelt wurde. Besonders im Teufenbereich >100m ist eine große Ähnlichkeit gegeben. Im Bereich 60-100 m ist eine deutliche Abweichung im Trend bei den Rauschmessungen während des Injektionstest zu erkennen. Während der Bohrarbeiten ist die Übereinstimmung größer.

### Interpretation

Die ermittelten Messdaten zeigen deutlich einen Zusammenhang der mittleren Rauschamplitude mit den gemessenen CBL-Amplituden. CBL Messungen basieren auf der Refraktion von Schallwellen an der Grenzfläche Bohrlochfluid und Verrohrung. Die Messung ist dabei hauptsächlich empfindlich auf die Ankopplung zwischen Verrohrung und Zement. Je besser die Ankopplung, desto niedriger die CBL Amplitude. Im Vergleich dazu misst das optische Messkabel ortsverteilte Dehnung. Diese Dehnung wird durch eine Deformation des Messkabels hervorgerufen. Das Messkabel hingegen wird durch die Verformung des umgebenden Materials, also der Deformation der Verrohrung und des Zementes, gedehnt bzw. gestaucht. Je besser die Ankopplung der einzelnen Komponenten der Bohrung (verschiedene Rohre und Zement), desto geringer die gemessene Amplitude. Je schlechter die Ankopplung zwischen Verrohrung und Gebirge, desto größer die Deformation. Dies bedeutet, dass das faseroptische Messkabel sowohl eine Aussage über die Kopplungseigenschaften des Zementes erlaubt als auch über Verformungen der Verrohrung. Die Signalquelle für die Deformation kann dabei von außen (seismischen Signal), als auch von Innen (Fluidströmung) kommen, wie in Abb. 2 zu sehen. Für Signale von außen muss hingegen noch die sphärische Divergenz berücksichtigt werden.

Die Abweichungen im Vergleich zu CBL Daten bei der Ankerrohrfahrt weisen eine hohe Systematik für die verschiedenen Arbeiten in der Bohrung auf. Die Abweichungen sind durch die in der Bohrung statt findenden Arbeiten beeinflusst. Die gemessene Rauschamplitude ist eine Messung der mittleren Ankopplung der einzelnen Verrohrung und Zementschichten an das Gebirge. Die Differenz wird daher eine Funktion der Kopplungseigenschaften der weiteren Ringräume sowie der durchgeführten Arbeiten/der Signalquelle sein. Die Messung erlaubt daher auch Aussagen über weiter innen und außen liegende Ringräume, was mit konventionellen Messverfahren kaum möglich ist.

### Abbildungen 4 bis 7:

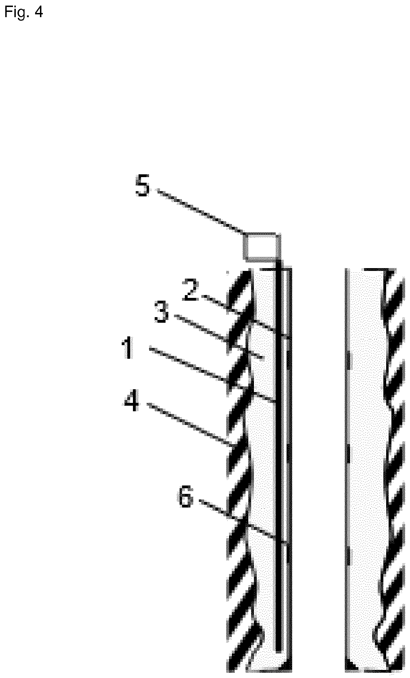

**Figur 4** zeigt eine bevorzugte Ausführungsform der Erfindung. Insbesondere zeigt Figur 1 einen Schnitt durch ein Bohrloch, das mit einem dichtenden Material (3), beispielsweise Zement, verfüllt ist. In dem in Figur 1 dargestellten Beispiel liegt das mindestens eine faseroptische Messkabel (1) in dem Zement (3) angeordnet vor. Diese Art der Fasereinbindung wird im Sinne der Erfindung bevorzugt als "Faserinstallation im "*behind casing*"" bezeichnet. Umgeben ist der Zement (3) beziehungsweise das Bohrloch von Gestein (4), Gesteinsmaterialien beziehungsweise einer Gesteinsformation (4). Das Messkabel (1) ist mit einem Meßgerät (5) verbunden. Es ist im Sinne der Erfindung, dass das Meßgerät (5) Bestandteil eines Dehnungsmessgeräts und/oder eines Dehnungsänderungsmessgeräts zur Verarbeitung der Dehnungsinformationen ist oder ein solches bildet. Figur 1 zeigt weiter eine Verrohrung (2), die sich in dem Bohrloch befindet. Die Verrohrung (2) weist Rohrverbinder (6) auf.

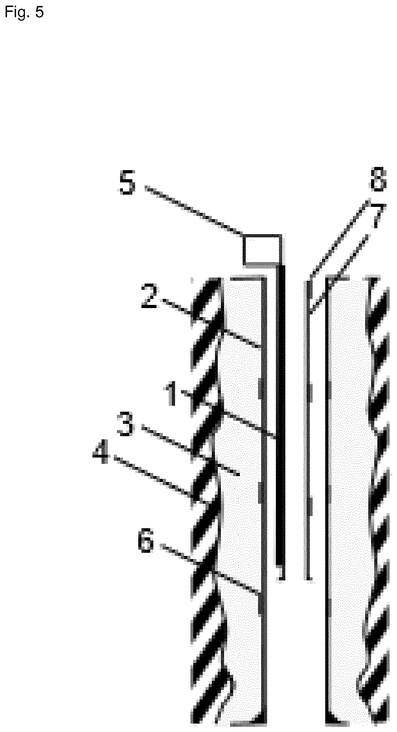

**Figur 5** zeigt eine alternative Einbringungsweise des Messkabels (1) in das Bohrloch, die im Sinne der Erfindung bevorzugt als Faserinstallation im *"behind tubing"* bezeichnet wird. In dem in Figur 2 dargestellten Beispiel sind Messkabel (1) in dem Bohrloch abgehangen. Ferner sind in Figur 2 eine Formation (4) dargestellt, das ein Bohrloch umgibt, das mit einem dichtenden Material (3), zum Beispiel Zement, gefüllt ist. Oberhalb des Bohrlochs, beispielsweise an der Erdoberfläche, befindet sich das Messgerät (5), mit dem die Messungen gemäß dem vorgeschlagenen Verfahren durchgeführt werden. Figur 2 zeigt darüber hinaus eine Verrohrung (2), die in dem Bohrloch angeordnet vorliegt und die über Rohrverbinder (6) verfügen kann. Das in Figur 2 dargestellte Bohrloch-Beispiel enthält ferner einen Produktionsstrang (7), der im Sinne der Erfindung bevorzugt auch als *Tubing* oder *Production String* bezeichnet werden kann. Es ist im Sinne der Erfindung bevorzugt, dass auch der Produktionsstrang (7) einen oder mehrere Rohrverbinder (8) aufweisen kann.

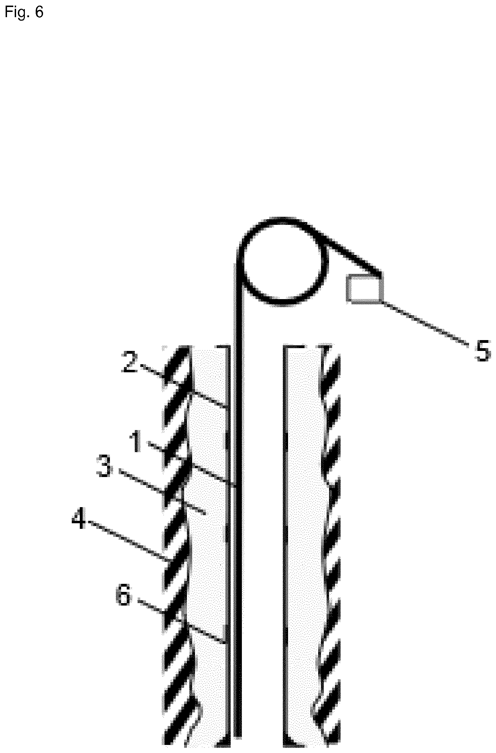

**Figur 6** zeigt ein weiteres Beispiel für eine mögliche Einbringung eines Messkabels (1) in das Bohrloch, die im Sinne der Erfindung als bevorzugt als "Faserinstallation *"wireline""* bezeichnet wird. Das Messkabel (1) ist in dieser Ausführungsform der Erfindung in dem Bohrloch abgehangen und kann beispielsweise über eine Rolle geführt werden, bevor es zum Messgerät (5) gelangt. In dem in Figur 3 dargestellten Bohrloch, das von einer Gesteinsformation (4) umgeben ist, befindet sich die Verrohrung (4), deren Anbindung an ein abdichtendes Material (3), beispielsweise Zement, unter anderem mit dem vorgeschlagenen Verfahren untersucht werden kann. Vorzugsweise umfasst die Verrohrung (2) einen oder mehrere Rohrverbinder (6).

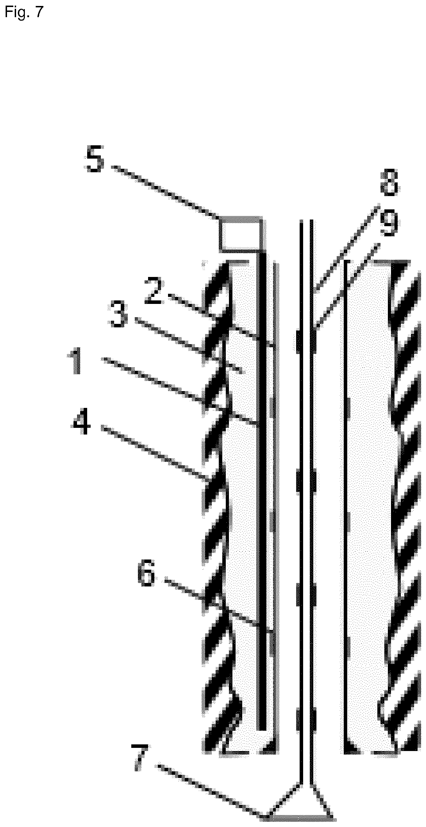

**Figur 7** zeigt eine Ausführungsform der Erfindung, bei der das Messkabel (1) in dem dichtenden Material (3) angeordnet ist. Insbesondere zeigt Figur 4 eine bevorzugte Implementierung der Erfindung, wenn eine *behind* casing-Installation zur Überwachung des Bohrprozesses und/oder des Bohrstrangs (8) bei Bohrlochvertiefungen genutzt wird. Das Bohrloch ist von einer Gesteinsformation (4) umgeben und mit einem Material (3), zum Beispiel Zement, verfüllt. Das Bohrloch umfasst eine Verrohrung (2), die mit Rohrverbindern (6) versehen sein kann. Die Dehnungs- oder Dehnungsänderungsmessungen werden mit dem Messgerät (5) vorgenommen. Der Bohrstrang (8) ist vorzugsweise zentral im Bohrloch angeordnet und kann ebenfalls Rohrverbinder (9) umfassen. Am unteren Ende des Bohrstrangs (8) ist der Bohrmei-βel (7) vorgesehen.

### Bezugszeichenliste:

- 1: Messkabel
- 2: Verrohrung
- 3: Dichtendes Material, zum Beispiel Zement
- 4: Gestein oder Formation
- 5: Messgerät
- 6: Rohrverbinder
- 7: *Tubing* oder Produktionsstrang (Fig. 2) beziehungsweise Bohrmeißel (Fig. 4)
- 8: Rohrverbinder (Fig. 2) beziehungsweise Bohrstrang/Drill *Pipe* (Fig. 4)
- 9: Rohrverbinder

### Literaturverzeichnis

[1] Raab et. al. 2019, Real-Time Well Integrity Monitoring using Fiber-Optic Distributed Acoustic Sensing. SPE Journal. doi: 10.2118/195678-PA (in press).
[2] Hartog, A. H. An Introduction to Distributed Optical Fibre Sensors. Taylor & Francis Group 2017.
[3] Masoudi, A., Belal, M., and Newson, T. P. 2013. A distributed optical fibre dynamic strain sensor based on phase-OTDR. Meas. Sci. Technol. 24(8). https://doi.org/10.1088/0957-0233/24/8/085204.
[4] Masoudi, A. & Newson, T. P. Contributed Review: Distributed optical fibre dynamic strain sensing, Review of Scientific Instruments, 2016, 87, 9.

## Patentansprüche

1. Verfahren zur Überwachung einer Bohrlochintegrität durch Überwachung eines in das Bohrloch eingebrachten Stützmaterials (3) und/oder einer eingebrachten Vorrichtung unter Verwendung mindestens eines faseroptischen Messkabels (1) umfassend die folgenden Schritte:
a) Einbringen des mindestens einen faseroptischen Messkabels (1) in das Bohrloch und in Verbindung bringen des Messkabels (1) mit dem Stützmaterial (3) und/oder der Vorrichtung, sodass ein physischer und/oder mechanischer Kontakt zwischen Messkabel (1) und Stützmaterial (3) und/oder der Vorrichtung besteht
b) Durchführung von Vibrations- und/oder Dehnungsmessungen innerhalb des Bohrlochs, wobei als Messsignal eine Zeitreihe einer Dehnung und/oder eine Dehnungsänderung mindestens eines Bereichs des faseroptischen Messkabels (1) zur Ermittlung einer Dehnung und/oder einer Dehnungsänderung des in diesem Bereich das faseroptische Messkabel (1) umgebenden Stützmaterials (3) und/oder der in diesem Bereich das faseroptische Messkabel (1) umgebenden Vorrichtung verwendet wird;
c) Analyse von Dehnungsamplituden und/oder einer Dehnungsamplitudenverteilung durch Zeitreihenvergleiche für verschiedene Bereiche und/oder verschiedene Zeiten zur Ermittlung einer mindestens bereichsweise ortsaufgelösten und/oder zeitaufgelösten Verteilung einer Information über den Zustand des Stützmaterials (3) und/oder der Vorrichtung
**dadurch gekennzeichnet, dass**
als Verteilung der Information über den Zustand eine Verteilung der Information über eine akustischen Impedanz und/oder über eine mechanische Kopplung von Stützmaterial (3), Vorrichtung und/oder Bohrlochumgebung verwendet wird, um Bereiche im Bohrloch zu bestimmen, an denen eine erhöhte Wahrscheinlichkeit für ein Auftreten von Materialermüdung des Stützmaterials (3) und/oder der Vorrichtung besteht, wobei eine mittlere Rauschamplitude analysiert wird und/oder Resonanzfrequenzen ausgewertet werden, wobei eine Superposition von akustischer Impedanz und mechanischer Kopplung die Rauschamplitude und/oder Resonanzfrequenzen bestimmen,
wobei die Information über die akustische Impedanz und/oder über eine mechanische Kopplung durch Vergleich von gemessenen Dehnungsamplituden verschiedener Bereiche und/oder Zeiten mit einer Referenzmessung bestimmt wird, wobei die Referenzmessung eine oder mehrere Messungen unter bekannten Bedingungen umfasst und als Kalibrationsmethode herangezogen wird.

2. Verfahren nach dem vorhergehenden Anspruch
**dadurch gekennzeichnet, dass**
die Information über eine mechanische Kopplung durch einen Vergleich von Dehnungsamplituden verschiedener Bereiche und/oder Zeiten bestimmt wird, wobei eine im Vergleich größere Dehnungsamplitude eine geringere mechanische Kopplung und/oder einer erhöhte Materialermüdung bedeuten.

3. Verfahren nach einem oder mehreren der vorhergehenden Ansprüche,
**dadurch gekennzeichnet, dass**
die Vibrations- und/oder Dehnungsmessungen ortsverteilten Dehnungsmessungen umfassen.

4. Verfahren nach einem oder mehreren der vorhergehenden Ansprüche,
**dadurch gekennzeichnet, dass**
eine Anordnung des faseroptischen Messkabels (1) in Längsrichtung entlang des Bohrlochs vorgenommen wird und die Dehnung und/oder Dehnungsänderung vertikale Bereiche des faseroptischen Messkabels (1) umfasst.

5. Verfahren nach einem oder mehreren der vorhergehenden Ansprüche
**dadurch gekennzeichnet, dass**
das faseroptische Messkabel (1) in einem Stützmaterial (3) in dem Bohrloch angeordnet vorliegt.

6. Verfahren nach einem oder mehreren der vorhergehenden Ansprüche
**dadurch gekennzeichnet, dass**
das faseroptische Messkabel (1) in dem Bohrloch abgehangen wird und/oder in Verbindung mit einer Verrohrung (2) in dem Bohrloch verwendet wird.

7. Verfahren nach einem oder mehreren der vorhergehenden Ansprüche
**dadurch gekennzeichnet, dass**
das Stützmaterial (3) ein das Bohrloch aushärtendes und/oder dichtendes Material, insbesondere Zement, umfasst, wobei die Messungen vorzugsweise während und/oder nach einem Aushärten des Stützmaterials (3) vorgenommen werden..

8. Verfahren nach einem oder mehreren der vorhergehenden Ansprüche
**dadurch gekennzeichnet, dass**
die Vorrichtung die Verrohrung (2) in dem Bohrloch und/oder ein Bohrstrang (8) umfasst.

9. Verfahren nach einem oder mehreren der vorhergehenden Ansprüche
**dadurch gekennzeichnet, dass**
die Messkabel (1) permanent oder temporär in dem Bohrloch eingebracht vorliegen.

10. System zur Durchführung des Verfahrens nach einem oder mehreren der Ansprüche 1 bis 9, wobei das System ein faseroptisches Messkabel (1) umfasst, das in ein Bohrloch eingebracht vorliegt, wobei in dem Bohrloch ein eingebrachtes Stützmaterial (3) und eine eingebrachte Vorrichtung vorliegen
**dadurch gekennzeichnet, dass**
das faseroptische Messkabel (1) dazu eingerichtet ist, mittels Vibrations- und/oder Dehnungsmessungen Dehnungsinformationen hinsichtlich des Stützmaterials (3) und/oder der Vorrichtung zu ermitteln, wobei das System eine Recheneinheit zur Analyse von Dehnungsamplituden und/oder eine Dehnungsamplitudenverteilung umfasst.

11. System nach Anspruch 10
**dadurch gekennzeichnet, dass**
das System ferner ein Dehnungsmessgerät (5) und/oder ein Dehnungsänderungsmessgerät (5) zur Verarbeitung der Dehnungsinformationen umfasst.

12. System nach einem oder mehreren der vorhergehenden Ansprüche 10-11
**dadurch gekennzeichnet, dass**
das System einen Zentralisator zur Zentralisierung einer Verrohrung im Bohrloch umfasst.

## Claims

1. A method for monitoring a borehole integrity by monitoring a support material (3) introduced into the borehole and/or an introduced device using at least one fiber optic measuring cable (1)
comprising the following steps:
a) inserting the at least one fiber optic measuring cable (1 ) into the borehole and connecting the logging cable (1) to the support material (3) and/or the device so that there is physical and/or mechanical contact between the logging cable (1) and the supporting material (3) and/or the device
b) carrying out vibration and/or strain measurements within the borehole, wherein a time series of a strain and/or a change in strain of at least one area of the fiber-optic measuring cable (1) is used as the measurement signal for determining a strain and/or a change in strain of the supporting material (3) surrounding the fiber optic measuring cable (1) in this area and/or the device surrounding the fiber optic measuring cable (1) in this area;
c) analyzing strain amplitudes and/or a strain amplitude distribution by time series comparisons for different areas and/or different times in order to determine an at least regionally spatially resolved and/or time-resolved distribution of information about the state of the support material (3) and/or the device
**characterized in that**
as distribution of the information on the condition, a distribution of information about an acoustic impedance and/or about a mechanical coupling of support material (3), device and/or borehole environment is used in order to determine areas in the borehole where there is an increased probability for an occurrence of material fatigue of the support material (3) and/or the device, wherein an average noise amplitude is analyzed and/or resonance frequencies are evaluated, wherein a superposition of acoustic impedance and mechanical coupling determine the noise amplitude and/or resonance frequencies,
wherein the information about the acoustic impedance and/or about a mechanical coupling is determined by comparing measured strain amplitudes of different areas and/or times with a reference measurement, wherein the reference measurement comprises one or more measurements under known conditions and is used as a calibration method.

2. The method according to the preceding claim,
**characterized in that**
the information about a mechanical coupling is determined by comparing strain amplitudes in different areas and/or times, wherein a comparatively larger strain amplitude signifies a lower mechanical coupling and/or increased material fatigue.

3. The method according to any one ore more of the preceding claims,
**characterized in that**
the vibration and/or strain measurements include spatially distributed strain measurements.

4. The method according to any one or more of the preceding claims,
**characterized in that**
an arrangement of the fiber optic measuring cable (1) is carried out in the longitudinal direction along the borehole and the strain and/or change in strain comprises vertical areas of the fiber optic measuring cable (1).

5. The method according to any one or more of the preceding claims,
**characterized in that**
the fiber optic measuring cable (1) is arranged in a support material (3) in the borehole.

6. The method according to any one or more of the preceding claims,
**characterized in that**
the fiber optic measuring cable (1) is suspended in the borehole and/or is used in connection with a casing (2) in the borehole.

7. The method according to any one or more of the preceding claims,
**characterized in that**
the support material (3) comprises a material, in particular cement, which hardens and/or seals the borehole, wherein the measurements preferably are carried out during and/or after hardening of the support material (3).

8. The method according to any one or more of the preceding claims,
**characterized in that**
the device comprises the casing (2) in the borehole and/or a drill string (8).

9. The method according to any one or more of the preceding claims,
**characterized in that**
the measuring cables (1) are installed permanently or temporarily in the borehole.

10. A system for carrying out the method according to any one or more of claims 1 to 9, wherein the system comprises a fiber optic measuring cable (1) that is inserted into a borehole, wherein an inserted support material (3) and an inserted device are present in the borehole,
**characterized in that**
the fiber optic measuring cable (1) is set up to determine strain information regarding the support material (3) and/or the device by means of vibration and/or strain measurements, wherein the system comprises a computing unit for analyzing strain amplitudes and/or a strain amplitude distribution.

11. The system according to claim 10,
**characterized in that**
the system further comprises a strain gauge (5) and/or a strain change gauge (5) for processing the strain information.

12. The system according to one or more of the preceding claims 10-11,
**characterized in that**
the system comprises a centralizer for centralizing a casing in the borehole.

## Revendications

1. Procédé pour surveiller l'intégrité d'un trou de forage en surveillant un matériau de support (3) introduit dans le trou de forage et/ou un dispositif introduit à l'aide d'au moins un câble de mesure à fibre optique (1),
comprenant les étapes suivantes :
a) insertion de l'au moins un câble de mesure à fibre optique (1) dans le trou de forage et liaison du câble de mesure à fibre optique (1) au matériau de support (3) et/ou au dispositif, de sorte qu'il y ait un contact physique et/ou mécanique entre le câble de mesure (1) et le matériau de support (3) et/ou le dispositif
b) réalisation de mesures de vibration et/ou de déformation dans le trou de forage, dans lequel une série temporelle d'une déformation et/ou d'une variation de déformation d'au moins une zone du câble de mesure à fibre optique (1) est utilisé comme signal de mesure pour déterminer une déformation et/ou une variation de déformation du matériau de support (3) entourant le câble de mesure à fibre optique (1) dans cette zone et/ou du dispositif entourant le câble de mesure à fibre optique (1) dans cette zone ;
c) analyse des amplitudes de déformation et/ou d'une distribution d'amplitude de déformation par des comparaisons de séries temporelles pour différentes zones et/ou différents moments afin de déterminer une distribution au moins régionalement résolue dans l'espace et/ou résolue dans le temps d'informations sur l'état du matériau de support (3) et/ou de l'appareil
**caractérisé en ce que**
une distribution d'informations sur une impédance acoustique et/ou sur un couplage mécanique du matériau de support (3), du dispositif et/ou de l'environnement du trou de forage est utilisée comme distribution des informations sur l'état afin de déterminer les zones dans le trou de forage où il y a une probabilité accrue d'apparition d'une fatigue matérielle du matériau de support (3) et/ou du dispositif, dans lequel une amplitude moyenne de bruit est analysée et/ou des fréquences de résonance sont évaluées, dans lequel une superposition d'impédance acoustique et de couplage mécanique détermine l'amplitude de bruit et/ou les fréquences de résonance,
dans lequel les informations sur l'impédance acoustique et/ou sur un couplage mécanique sont déterminées en comparant des amplitudes de déformation mesurées de différentes plages et/ou durées avec une mesure de référence, dans lequel la mesure de référence comprend une ou plusieurs mesures dans des conditions connues et est utilisée comme méthode d'étalonnage.

2. Procédé selon la revendication précédente,
**caractérisé en ce que**
les informations sur un couplage mécanique sont déterminées en comparant des amplitudes de déformation de différentes zones et/ou moments, dans lequel une amplitude de déformation comparativement plus grande signifie un couplage mécanique plus faible et/ou une fatigue accrue du matériau.

3. Procédé selon une ou plusieurs des revendications précédentes,
**caractérisé en ce que**
les mesures de vibration et/ou de déformation comprennent des mesures de déformation distribuées dans l'espace.

4. Procédé selon une ou plusieurs des revendications précédentes,
**caractérisé en ce que**
un agencement du câble de mesure à fibre optique (1) est effectué dans la direction longitudinale le long du trou de forage et la déformation et/ou la variation de la déformation comprend des zones verticales du câble de mesure à fibre optique (1).

5. Procédé selon une ou plusieurs des revendications précédentes,
**caractérisé en ce que**
le câble de mesure à fibre optique (1) est disposé dans un matériau de support (3) dans le trou de forage.

6. Procédé selon une ou plusieurs des revendications précédentes,
**caractérisé en ce que**
le câble de mesure à fibre optique (1) est suspendu dans le trou de forage et/ou est utilisé en liaison avec un tubage (2) dans le trou de forage.

7. Procédé selon une ou plusieurs des revendications précédentes,
**caractérisé en ce que**
le matériau de support (3) comprend un matériau, en particulier du ciment, qui durcit et/ou scelle le trou de forage, dans lequel les mesures sont de préférence effectuées pendant et/ou après le durcissement du matériau de support (3).

8. Procédé selon une ou plusieurs des revendications précédentes,
**caractérisé en ce que**
le dispositif comprend le tubage (2) dans le trou de forage et/ou un train de forage (8).

9. Procédé selon une ou plusieurs des revendications précédentes,
**caractérisé en ce que**
les câbles de mesure (1) sont installés de manière permanente ou temporaire dans le trou de forage.

10. Système pour mettre en œuvre le procédé selon une ou plusieurs des revendications 1 à 9, dans lequel le système comprend un câble de mesure à fibre optique (1) qui est inséré dans un trou de forage, dans lequel un matériau de support inséré (3) et un dispositif inséré sont présents dans le trou de forage, **caractérisé en ce que**
le câble de mesure à fibre optique (1) est configuré pour déterminer des informations de déformation concernant le matériau de support (3) et/ou le dispositif au moyen de mesures de vibration et/ou de déformation, dans lequel le système comprend une unité de calcul pour l'analyse d'amplitudes de déformation et/ou une distribution d'amplitudes de déformation.

11. Système selon la revendication 10,
**caractérisé en ce que**
le système comprend en outre un appareil de mesure de déformation (5) et/ou un appareil de mesure de variation de déformation (5) pour traiter l'information de déformation.

12. Système selon une ou plusieurs des revendications précédentes 10 ou 11,
**caractérisé en ce que**
le système comprend un centreur pour centrer une colonne de tubage dans le trou de forage.
